(19) Europäisches Patentamt / European Patent Office / Office européen des brevets

(11) **EP 2 924 775 B1**

(12) **EUROPEAN PATENT SPECIFICATION**

(45) Date of publication and mention of the grant of the patent:
**03.03.2021 Bulletin 2021/09**

(21) Application number: **13856737.5**

(22) Date of filing: **19.11.2013**

(51) Int Cl.:
*H01M 4/38* (2006.01)    *H01M 4/134* (2010.01)
*H01M 4/58* (2010.01)    *C22C 13/00* (2006.01)
*C22C 28/00* (2006.01)    *C22C 30/04* (2006.01)
*C22C 24/00* (2006.01)    *H01M 4/46* (2006.01)
*H01M 10/0525* (2010.01)    *H01M 4/66* (2006.01)
*H01M 4/02* (2006.01)    *C22C 19/03* (2006.01)
*C22C 21/00* (2006.01)    *H01M 4/62* (2006.01)

(86) International application number:
**PCT/JP2013/081110**

(87) International publication number:
**WO 2014/080883 (30.05.2014 Gazette 2014/22)**

(54) **NEGATIVE ELECTRODE FOR ELECTRICAL DEVICE, AND ELECTRICAL DEVICE USING SAME**

NEGATIVELEKTRODE FÜR EINE ELEKTRISCHE VORRICHTUNG UND ELEKTRISCHE VORRICHTUNG DAMIT

ELECTRODE NÉGATIVE POUR DISPOSITIF ÉLECTRIQUE ET DISPOSITIF ÉLECTRIQUE L'UTILISANT

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.11.2012 JP 2012256929**

(43) Date of publication of application:
**30.09.2015 Bulletin 2015/40**

(73) Proprietor: **NISSAN MOTOR CO., LTD.**
**Yokohama-shi, Kanagawa 220-8623 (JP)**

(72) Inventors:
• **MIKI, Fumihiro**
 **Atsugi-shi**
 **Kanagawa 243-0123 (JP)**
• **WATANABE, Manabu**
 **Atsugi-shi**
 **Kanagawa 243-0123 (JP)**
• **YAMAMOTO, Kensuke**
 **Atsugi-shi**
 **Kanagawa 243-0123 (JP)**
• **SANADA, Takashi**
 **Atsugi-shi**
 **Kanagawa 243-0123 (JP)**
• **CHIBA, Nobutaka**
 **Atsugi-shi**
 **Kanagawa 243-0123 (JP)**

(74) Representative: **Hoefer & Partner Patentanwälte mbB**
**Pilgersheimer Straße 20**
**81543 München (DE)**

(56) References cited:
**WO-A1-2012/160858**    **WO-A1-2012/160866**
**WO-A1-2013/099440**    **JP-A- 2004 311 429**
**JP-A- 2007 149 604**    **JP-A- 2010 205 609**
**JP-A- 2011 048 969**    **US-A1- 2006 040 182**
**US-A1- 2010 167 126**

**Description**

TECHNICAL FIELD

The present invention relates to a negative electrode for an electric device and an electric device using the same. In particular, the negative electrode for an electric device and the electric device using the same according to the present invention are used for a driving power source and an auxiliary power source of a motor serving as, for example, a secondary battery or a capacitor for use in a vehicle such as an electric vehicle, a fuel cell vehicle and a hybrid electric vehicle.

BACKGROUND ART

There has been a strong demand for reduction of the amount of carbon dioxide in order to deal with atmospheric pollution and global warming. In the automobile industry, the reduction of emissions of carbon dioxide is highly expected in association with the spread of electric vehicles (EV) and hybrid electric vehicles (HEV). Thus, development of electric devices such as secondary batteries for driving motors as a key to practical application of such vehicles, is actively being carried out.

The secondary batteries for driving motors are required to have quite high output performance and high energy as compared with lithium ion secondary batteries for general use in mobile phones, laptop computers and the like. Therefore, lithium ion secondary batteries having the highest theoretical energy among all types of batteries are gaining increasing attention, which is leading to rapid development of the lithium ion secondary batteries.

A lithium ion secondary battery generally includes: a positive electrode including a positive electrode current collector to which a positive electrode active material and the like is applied on both surfaces via a binder, a negative electrode including a negative electrode current collector to which a negative electrode active material and the like is applied on both surfaces via a binder, and an electrolyte layer, the positive electrode and the negative electrode being connected to each other via the electrolyte layer and housed in a battery case.

In such a conventional lithium ion secondary battery, a carbon/graphite-based material having the advantage of charge-discharge cycle life or costs has been used for the negative electrode. However, the carbon/graphite-based negative electrode material has the disadvantage that a sufficient theoretical charge-discharge capacity of 372 mAh/g or higher obtained from $LiC_6$ as a lithium introduction compound accounting for the largest amount, cannot be ensured because the battery is charged/discharged by absorbing lithium ions into graphite crystals and releasing the lithium ions therefrom. As a result, it is difficult to ensure a capacity and energy density sufficient to satisfy vehicle usage on the practical level by use of the carbon/graphite-based negative electrode material.

On the other hand, a battery using a material alloyed with Li for a negative electrode has higher energy density than the conventional battery using the carbon/graphite-based negative electrode material. Therefore, such a negative electrode material is highly expected to be used for a battery in a vehicle. For example, 1 mole of a Si material absorbs and releases 4.4 moles of lithium ions, in accordance with the following reaction formula (A), during charge and discharge, and a theoretical capacity of $Li_{22}Si_5$ (=$Li_{4.4}Si$) is 2100 mAh/g. Further, the Si material has an initial capacity as high as 3200 mAh/g in the case of calculation per Si weight.

[Chem. 1]

$$Si+4.4Li^++e^-+\leftrightarrow Li_{4.4}Si \qquad (A)$$

However, in the lithium ion secondary battery using the material alloyed with Li for the negative electrode, expansion-shrinkage in the negative electrode at the time of charge and discharge is large. For example, volumetric expansion of the graphite material in the case of absorbing Li ions is approximately 1.2 times. However, the Si material has a problem of a reduction in cycle life of the electrode due to a large volumetric change (approximately 4 times) which is caused by transition from an amorphous state to a crystal state when Si is alloyed with Li. In addition, when using the Si negative electrode active material, a capacity has a trade-off relationship with cycle durability. Thus, it is difficult to increase the capacity and improve the cycle durability concurrently.

In order to deal with the problems described above, there is known a negative electrode active material for a lithium ion secondary battery containing an amorphous alloy having a formula: $Si_xM_yAl_z$ (for example, refer to Patent Document 1). In the formula, x, y, and z represent atomic percent values and satisfy the conditions of x+y+z=100, x≥55, y<22, and z>0, and M is a metal formed of at least one of Mn, Mo, Nb, W, Ta, Fe, Cu, Ti, V, Cr, Ni, Co, Zr, and Y. Patent Document 1 teaches in paragraph [0018] that good cycle life is ensured in addition to a high capacity by minimizing the content of the metal M.

CITATION LIST

PATENT DOCUMENT

Patent Document 1: Japanese Translation of PCT International Application Publication No. JP-T-2009-517850
Patent document 2: WO2012/160866, Patent document 3: WO2012/160858, Patent document 4: WO2013/099440 and US2006040182 disclose electrodes comprising an alloy comprising silicon and tin. Patent documents 2 - 4 are intermediate publications.

SUMMARY OF THE INVENTION

In the case of using the lithium ion secondary battery including the negative electrode containing the amorphous alloy having the formula: $Si_xM_yAl_z$, as disclosed in Patent Document 1, although good cycle property can be exhibited, an initial capacity is not ensured sufficiently initial capacitycycle property. Further, the cycle property is not very satisfactory to the lithium ion secondary batterycycle property.

An object of the present invention is to provide a negative electrode for an electric device such as a Li ion secondary battery capable of exhibiting well-balanced characteristics of a high cycle property and a high initial capacity.

An electrode according to the invention is defined by the appended claims.

The inventors of the present invention devoted themselves to continuous studies to solve the conventional problems. As a result, the inventors found out that it is possible to solve the problems by using a predetermined ternary Si alloy and a resin as a binder having an E elastic modulus within a predetermined range to accomplish the present invention.

The present invention relates to a negative electrode for an electric device including a current collector and an electrode layer containing a negative electrode active material, an electrically-conductive auxiliary agent and a binder and formed on a surface of the current collector. The negative electrode active material contains an alloy represented by the following formula (1).

[Chem. 2]

$$Si_xSn_yM_zA_a \qquad (1)$$

In the formula (1), M is at least one metal selected from the group consisting of Al, V, C and a combination thereof, A is an inevitable impurity, and x, y, z and a represent mass percent values and satisfy conditions as defined in the independent claims. The binder contains a resin having an E elastic modulus of greater than 2.1 GPa and less than 7.00 GPa.

BRIEF DESCRIPTION OF DRAWINGS

[Fig. 1] Fig. 1 is a cross-sectional view schematically showing an outline of a laminated-type flat non-bipolar lithium ion secondary battery which is a typical embodiment of an electric device according to the present invention.

[Fig. 2] Fig. 2 is a perspective view schematically showing an appearance of the laminated-type flat lithium ion secondary battery which is the typical embodiment of the electric device according to the present invention.

[Fig. 3] Fig. 3 is a ternary composition diagram showing composition ranges of a Si-Sn-Al series alloy contained in a negative electrode active material included in a negative electrode for an electric device according to the present invention, wherein alloy compositions obtained in Reference Example A are plotted.

[Fig. 4] Fig. 4 is a ternary composition diagram showing preferable composition ranges of the Si-Sn-Al series alloy contained in the negative electrode active material included in the negative electrode for an electric device according to the present invention.

[Fig. 5] Fig. 5 is a ternary composition diagram showing more preferable composition ranges of the Si-Sn-Al series alloy contained in the negative electrode active material included in the negative electrode for an electric device according to the present invention.

[Fig. 6] Fig. 6 is a ternary composition diagram showing still more preferable composition ranges of the Si-Sn-Al series alloy contained in the negative electrode active material included in the negative electrode for an electric device according to the present invention.

[Fig. 7] Fig. 7 is a ternary composition diagram showing composition ranges of a Si-Sn-V series alloy contained in the negative electrode active material included in the negative electrode for an electric device according to the present invention, wherein alloy compositions obtained in Reference Example B are plotted.

[Fig. 8] Fig. 8 is a ternary composition diagram showing preferable composition ranges of the Si-Sn-V series alloy contained in the negative electrode active material included in the negative electrode for an electric device according to the present invention.

[Fig. 9] Fig. 9 is a ternary composition diagram showing more preferable composition ranges of the Si-Sn-V series alloy contained in the negative electrode active material included in the negative electrode for an electric device according to the present invention.

[Fig. 10] Fig. 10 is a ternary composition diagram showing still more preferable composition ranges of the Si-Sn-V series alloy contained in the negative electrode active material included in the negative electrode for an electric device according to the present invention.

[Fig. 11] Fig. 11 is a ternary composition diagram showing composition ranges of a Si-Sn-C series alloy contained in the negative electrode active material included in the negative electrode for an electric device according to the present invention, wherein alloy compositions obtained in Reference Example C are plotted.

[Fig. 12] Fig. 12 is a ternary composition diagram showing preferable composition ranges of the Si-Sn-C series alloy contained in the negative electrode active material included in the negative electrode for an electric device according to the present invention.

[Fig. 13] Fig. 13 is a ternary composition diagram showing more preferable composition ranges of the Si-Sn-C series alloy contained in the negative electrode active material included in the negative electrode for an electric device according to the present invention.

[Fig. 14] Fig. 14 is a ternary composition diagram showing still more preferable composition ranges of the Si-Sn-C series alloy contained in the negative electrode active material included in the negative electrode for an electric device according to the present invention.

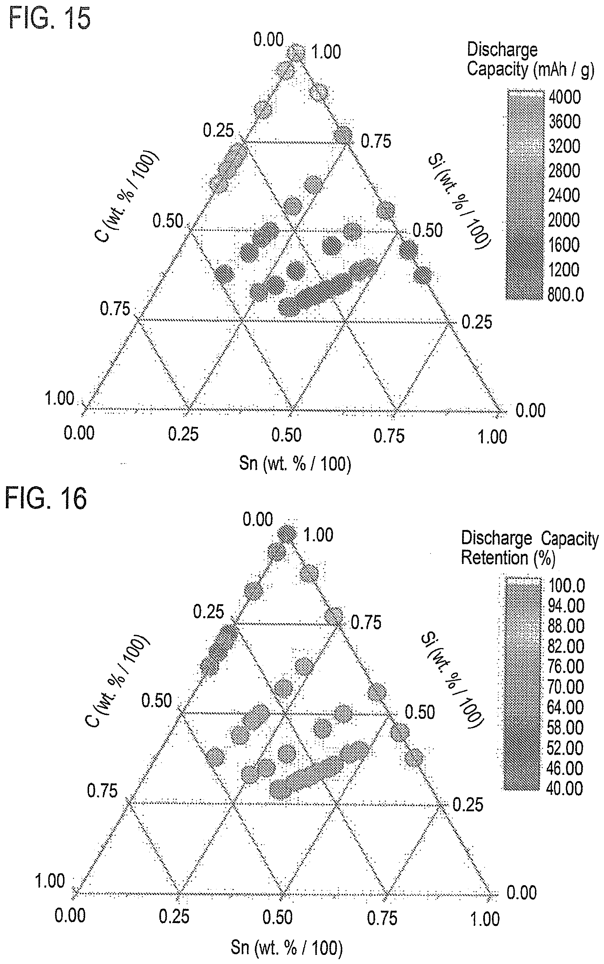

[Fig. 15] Fig. 15 is a diagram showing an influence of the alloy composition of the negative electrode active material on an initial discharge capacity of a battery obtained in each of reference examples and comparative reference examples.

[Fig. 16] Fig. 16 is a diagram showing an influence of the alloy composition of the negative electrode active material on a discharge capacity retention rate at the 50th cycle in the battery obtained in each of the reference examples and comparative reference examples.

[Fig. 17] Fig. 17 is a diagram showing an influence of the alloy composition of the negative electrode active material on a discharge capacity retention rate at the 100th cycle in the battery obtained in each of the reference examples and comparative reference examples.

[Fig. 18] Fig. 18 is a graph showing a relationship between an E elastic modulus of a binder contained in an electrode layer and a discharge capacity of a battery.

## DESCRIPTION OF EMBODIMENTS

As described above, the present invention is characterized by a predetermined ternary Si alloy (a Si-Sn-M series ternary alloy) used as a negative electrode active material and a resin used as a binder having an E elastic modulus within a predetermined range so as to form a negative electrode for an electric device.

The present invention uses the Si-Sn-M series ternary alloy and the resin having elastic modulus within a predetermined range as a binder material in an electrode layer (a negative electrode active material layer), so as to suppress amorphous-crystal phase transition when Si is alloyed with Li and improve cycle life. In addition, the resin having the elastic modulus within a predetermined range used as a binder material can follow a volumetric change due to expansion-contraction of the negative electrode active material during charge and discharge of the battery, so as to suppress a volumetric change of the entire electrode. Further, due to the high elastic modulus (mechanical strength) of the binder material, a reaction of lithium ions to the negative electrode active material in association with charge and discharge can progress sufficiently. These multiple functions enable the negative electrode according to the present invention to achieve significant effects of exhibiting a high initial capacity, a high capacity and high cycle durability.

Hereinafter, the embodiment of a negative electrode for an electric device and an electric device using the same according to the present invention will be explained with reference to the drawings. It should be noted that the technical scope of the present invention should be defined based on the appended claims and is not limited to the embodiment described below. In the description of the drawings, the same elements are indicated by the same reference numerals, and overlapping explanations thereof are not repeated. In addition, dimensional ratios in the drawings are magnified for convenience of explanation and may be different from actual ratios.

Hereinafter, a fundamental configuration of the electric device to which the negative electrode for an electric device according to the present invention is applied will be explained with reference to the drawings. In the present embodiment, a lithium ion secondary battery is exemplified as the electric device. Note that, in the present invention, "an electrode layer" represents a compound layer including a negative electrode active material, an electrically-conductive auxiliary agent and a binder and is also referred to as "a negative electrode active material layer" in the explanation of the present specification. Similarly, an electrode layer on the positive electrode side is also referred to as "a positive electrode active material layer".

In a negative electrode for a lithium ion secondary battery, which is a typical embodiment of the negative electrode for an electric device according to the present invention and a lithium ion secondary battery using the same, a cell (single cell layer) has large voltage so that high energy density and high output density can be ensured. Thus, the lithium ion secondary battery using the negative electrode for a lithium ion secondary battery according to the present embodiment is suitable for a driving power source or an auxiliary power source for a vehicle and is therefore desirable to be used as a lithium ion secondary battery for a driving power source and the like for use in a vehicle. Further, the present invention can be applied appropriately to lithium ion secondary batteries for mobile devices such as mobile phones.

In other words, other constituent requirements in the lithium ion secondary battery as an object of the present embodiment are not particularly limited as long as the lithium ion secondary battery is obtained by use of the negative electrode for a lithium ion secondary battery according to the present embodiment described below.

For example, when the lithium ion secondary battery is differentiated from other batteries in terms of the shape and structure, the lithium ion secondary battery may be applicable to any batteries having known shapes and structures such as a laminated (flat) battery and a wound (cylindrical) battery. The structure of the laminated (flat) battery contributes to ensuring long-term reliability by a simple sealing technology such as thermo-compression bonding and therefore has the advantage of costs and workability.

In terms of electrical connection (electrode structure) inside the lithium ion secondary battery, the lithium ion secondary battery may be applicable not only to a non-bipolar (internal parallel connection type) battery but also to a bipolar (internal serial connection type) battery.

When the lithium ion secondary battery is differentiated from other batteries in terms of the type of an electrolyte layer used therein, the lithium ion secondary battery may be applicable to batteries including various types of known electrolyte layers such as a solution electrolyte battery in which a solution electrolyte such as a non-aqueous electrolysis solution is used for an electrolyte layer and a polymer battery in which a polymer electrolyte is used for an electrolyte layer. The polymer battery is classified into a gel electrolyte battery using a polymer gel electrolyte (also simply referred to as a gel electrolyte) and a solid polymer (all solid state) battery using a polymer solid electrolyte (also simply referred to as a polymer electrolyte).

Therefore, in the following explanation, a non-bipolar (internal parallel connection type) lithium ion secondary battery using the negative electrode for a lithium ion secondary battery according to the present embodiment will be explained briefly with reference to the drawings. However, the technical scope of the lithium ion secondary battery according to the present embodiment should not be limited to the following explanations.

<Entire Configuration of Battery>

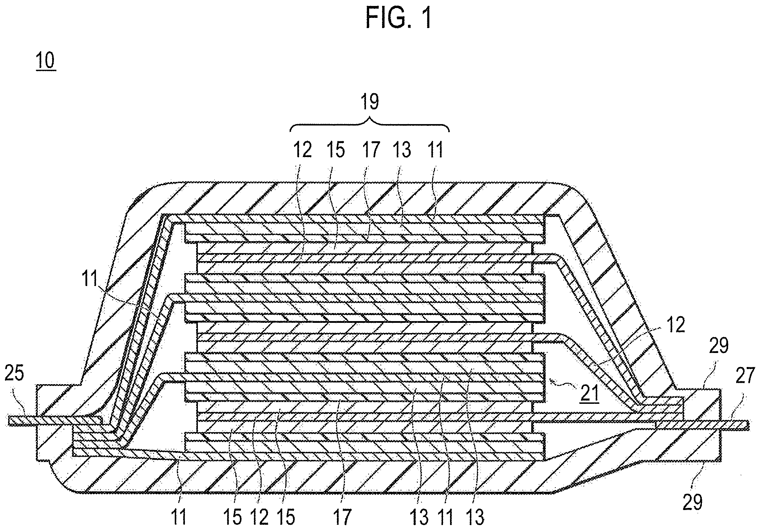

Fig. 1 is a schematic cross-sectional view showing the entire configuration of a flat (laminated) lithium ion secondary battery (hereinafter, also simply referred to as a "laminated battery") which is a typical embodiment of the electric device according to the present invention.

As shown in Fig. 1, a laminated battery 10 according to the present embodiment has a configuration in which a substantially rectangular power generation element 21, in which a charge-discharge reaction actually progresses, is sealed inside a laminated sheet 29 as a battery exterior member. The power generation element 21 has a configuration in which positive electrodes, electrolyte layers 17 and negative electrodes are stacked, each positive electrode having a configuration in which positive electrode active material layers 13 are provided on both surfaces of a positive electrode current collector 11, each negative electrode having a configuration in which negative electrode active material layers 15 are provided on both surfaces of a negative electrode current collector 12. In other words, several sets of the positive electrode, the electrolyte layer and the negative electrode arranged in this order are stacked on top of each other in a manner such that one positive electrode active material layer 13 faces one negative electrode active material layer 15 with the electrolyte layer 17 interposed therebetween.

The positive electrode, the electrolyte layer and the negative electrode that are adjacent to one another thus constitute a single cell layer 19. Thus, the laminated battery 10 shown in Fig. 1 has a configuration in which the plural single cell layers 19 are stacked on top of each other so as to be electrically connected in parallel. Here, the positive electrode current collectors located on both outermost layers of the power generation element 21 are each provided with the positive electrode active material layer 13 only on one side thereof. Alternatively, the outermost positive electrode current collectors may each be provided with the positive electrode active material layers 13 on both sides thereof. That is, the current collectors each provided with the positive electrode active material layers on both sides thereof may be used as the respective outermost layers, in addition to the case where the current collectors each provided with the positive electrode active material layer 13 only on one side thereof are used as the respective outermost layers. Similarly, the negative electrode current collectors each provided with the negative electrode active material layer on one side or both sides thereof, may be located on the respective outermost layers of the power generation element 21 in a manner such that the positions of the positive electrodes and the negative electrodes shown in Fig. 1 are reversed.

A positive electrode current collecting plate 25 and a negative electrode current collecting plate 27 which are electrically electrically-conductive to the respective electrodes (the positive electrodes and the negative electrodes) are attached to the positive electrode current collectors 11 and the negative electrode current collectors 12, respectively. The positive electrode current collecting plate 25 and the negative electrode current collecting plate 27 are held by the respective end portions of the laminated sheet 29 and exposed to the outside of the laminated sheet 29. The positive electrode current collecting plate 25 and the negative electrode current collecting plate 27 may be attached to the positive electrode current collectors 11 and the negative electrode current collectors 12 of the respective electrodes via a positive electrode lead and a negative electrode lead (not shown in the figure) as appropriate by, for example, ultrasonic welding or resistance welding.

The lithium ion secondary battery described above is characterized by the negative electrode. Main constituent members of the battery including the negative electrode will be explained below.

<Active Material Layer>

The active material layer 13 or 15 contains an active material and other additives as necessary.

[Positive Electrode Active Material Layer]

The positive electrode active material layer 13 contains a positive electrode active material.

(Positive Electrode Active Material)

Examples of the positive electrode active material include a lithium-transition metal composite oxide, a lithium-transition metal phosphate compound, a lithium-transition metal sulfated compound, a solid solution series material, a ternary series material, an NiMn series material, an NiCo series material, and a spinel-manganese series material.

Examples of the lithium-transition metal composite oxide include $LiMn_2O_4$, $LiCoO_2$, $LiNiO_2$, $Li(Ni, Mn, Co)O_2$, $Li(Li, Ni, Mn, Co)O_2$, $LiFePO_4$, and an oxide in which part of the transition metal contained in each of these composite oxides is substituted with other elements.

Examples of the solid solution series material include $xLiMO_2 \cdot (1-x)Li_2NO_3$ (where $0<x<1$, M represents at least one transition metal in an average oxidation state of 3+, and N represents at least one transition metal in an average oxidation state of 4+), and $LiRO_2$-$LiMn_2O_4$ (where R represents a transition metal element such as Ni, Mn, Co, and Fe).

The ternary series material may be a nickel-cobalt-manganese composite positive electrode material.

The NiMn series material may be $LiNi_{0.5}Nb_{1.5}O_4$.

The NiCo series material may be $Li(NiCo)O_2$.

The spinel-manganese series material may be $LiMn_2O_4$.

Two or more kinds of the positive electrode active materials may be combined together according to circumstances. In view of a capacity and output performance, the lithium-transition metal composite oxide is preferably used for the positive electrode active material. Note that other positive electrode active materials not listed above can, of course, be used instead. In the case that the respective active materials require different particle diameters in order to achieve their own appropriate effects, the active materials having different particle diameters may be selected and mixed together so as to optimally function to achieve their own effects. Thus, it is not necessary to equalize the particle diameter of all of the active materials.

An average particle diameter of the positive electrode active material contained in the positive electrode active material layer 13 is not particularly limited; however, in view of higher output performance, the average particle diameter is preferably in the range from 1 $\mu$m to 30 $\mu$m, more preferably in the range from 5 $\mu$m to 20 $\mu$m. Note that, in the present specification, "the particle diameter" represents the greatest length between any two points on the circumference of the active material particle (the observed plane) observed by observation means such as a scanning electron microscope (SEM) and a transmission electron microscope (TEM). In addition, "the average particle diameter" represents a value calculated with the scanning electron microscope (SEM) or the transmission electron microscope (TEM) as an average value of particle diameters of the particles observed in several to several tens of fields of view. Particle diameters and average particle diameters of other constituents may also be determined in the same manner.

The positive electrode active material layer 13 may contain a binder.

(Binder)

The binder is added to bind the active materials to each other or bind the active material to the current collector to maintain the electrode structure. The binder used in the positive electrode active material layer is not particularly limited. Examples of the binder include: a thermoplastic polymer such as polyethylene, polypropylene, polyethylene terephthalate (PET), polyethernitrile (PEN), polyacrylonitrile, polyimide, polyamide, polyamide imide, cellulose, carboxymethylcellulose (CMC), an ethylene-vinyl acetate copolymer, polyvinyl chloride, styrene butadiene rubber (SBR), isoprene rubber, butadiene rubber, ethylene propylene rubber, an ethylene propylene diene copolymer, a styrene-butadiene-styrene block copolymer and a hydrogen additive thereof, and a styrene-isoprene-styrene block copolymer and a hydrogen additive thereof; fluorine resin such as polyvinylidene fluoride (PVdF), polytetrafluoroethylene (PTFE), a tetrafluoroethylene-hexafluoropropylene copolymer (FEP), a tetrafluoroethylene-perfluoroalkyl vinyl ether copolymer (PFA), an ethylene-tetrafluoroethylene copolymer (ETFE), polychlorotrifluoroethylene (PCTFE), an ethylene-chlorotrifluoroethylene copolymer (ECTFE), and polyvinyl fluoride (PVF); vinylidene fluoride fluoro rubber such as vinylidene fluoride-hexafluoropropylene fluoro rubber (VDF-HFP fluoro rubber), vinylidene fluoride-hexafluoropropylene-tetrafluoroethylene fluoro rubber (VDF-HFP-TFE fluoro rubber), vinylidene fluoride-pentafluoropropylene fluoro rubber (VDF-PFP fluoro rubber), vinylidene fluoride-pentafluoropropylene-tetrafluoroethylene fluoro rubber (VDF-PFP-TFE fluoro rubber), vinylidene fluoride-perfluoromethyl vinyl ether-tetrafluoroethylene fluoro rubber (VDF-PFMVE-TFE fluoro rubber), and vinylidene fluoride-chlorotrifluoroethylene fluoro rubber (VDF-CTFE fluoro rubber); and epoxy resin. Among these, polyvinylidene fluoride, polyimide, styrene-butadiene rubber, carboxymethyl cellulose, polypropylene, polytetrafluoroethylene, polyacrylonitrile, polyamide, and polyamide imide are particularly preferable. These binders are suitable for use in the active material layer since these binders have high heat resistance, have quite a wide potential window, and are stable with respect to both positive electrode potential and negative electrode potential. These binders may be used alone or in combination of two or more.

The amount of the binder contained in the positive electrode active material layer is not particularly limited as long as it is sufficient to bind the active material. However, the amount of the binder is preferably in the range from 0.5 to 15% by mass, more preferably in the range from 1 to 10% by mass.

The positive electrode (the positive electrode active material layer) may be formed by a method of applying (coating) ordinary slurry thereto, or by any of a kneading method, a sputtering method, a vapor deposition method, a CVD method, a PVD method, an ion plating method, and a thermal spraying method.

[Negative Electrode Active Material Layer]

The negative electrode active material layer 15 contains a negative electrode active material.

(Negative Electrode Active Material)

The negative electrode active material inevitably contains a predetermined alloy.

Alloy

The alloy according to the present embodiment is represented by the following chemical formula (1).
[Chem. 3]

$$Si_xSn_yM_zA_a \qquad (1)$$

In the formula (1), M is at least one metal selected from the group consisting of Al, V, C, and a combination thereof, and A represents inevitable impurities. Further, x, y, z and a represent mass percent values and satisfy the conditions of $0<x<100$, $0<y<100$, $0<z<100$, $0\leq5a<0.5$, and $x+y+z+a=100$. Note that, in the present specification, the "inevitable impurities" described above are substances in the Si alloy which are derived from the raw materials or inevitably mixed in the production process. The inevitable impurities contained are essentially unnecessary but permissible substances, since the amount thereof is quite small and there is no influence on the characteristics of the Si alloy.

In the present embodiment, a first additive element Sn and a second additive element M (at least one metal selected from the group consisting of Al, V, C, and a combination thereof) are selected as a negative electrode active material so as to suppress amorphous-crystal phase transition at the time of the alloying with Li and extend cycle life. Accordingly, the negative electrode active material thus obtained has a higher capacity than conventional negative electrode active materials such as carbon-based negative electrode active materials.

The reason the amorphous-crystal phase transition should be suppressed at the time of the alloying with Li is that the function as an active material is lost by breakage of particles per se due to a large volumetric change (approximately 4 times) in the Si material which is caused by transition from an amorphous state to a crystal state when Si is alloyed with Li. In other words, the suppression of the amorphous-crystal phase transition can prevent breakage of the particles per se, secure the function as an active material (high capacity) and extend cycle life. The first and second additive elements selected as described above can provide the Si alloy negative electrode active material having a high capacity and cycle durability.

As described above, M is at least one metal selected from the group consisting of Al, V, C, and a combination thereof. The following are the details of the Si alloy having each of compositions $Si_xSn_yAl_zA_a$, $Si_xSn_yV_zA_a$ and $Si_xSn_yC_zA_a$.

$Si_xSn_yAl_zA_a$

The composition $Si_xSn_yAl_zA_a$ obtained by selecting Sn as a first additive element and Al as a second additive element as described above can suppress the amorphous-crystal phase transition at the time of the alloying with Li so as to extend cycle life. Accordingly, the negative electrode active material thus obtained has a higher capacity than conventional negative electrode active materials such as carbon-based negative electrode active materials.

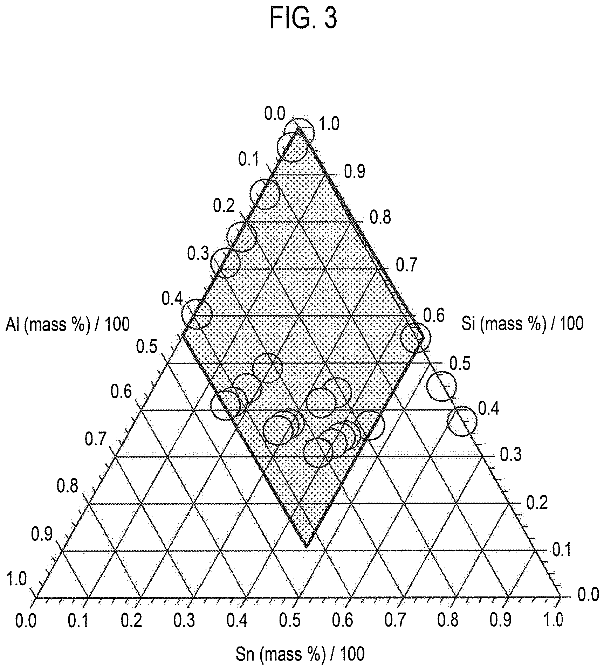

In the alloy composition described above, x is preferably 12 or greater and less than 100, y is preferably greater than 0 and 45 or less, and z is preferably greater than 0 and 43 or less. The composition ranges of this alloy correspond to the area indicated by hatching in Fig. 3. The alloy having this composition can not only exhibit a high capacity and but also keep a high discharge capacity even after 50 cycles and 100 cycles.

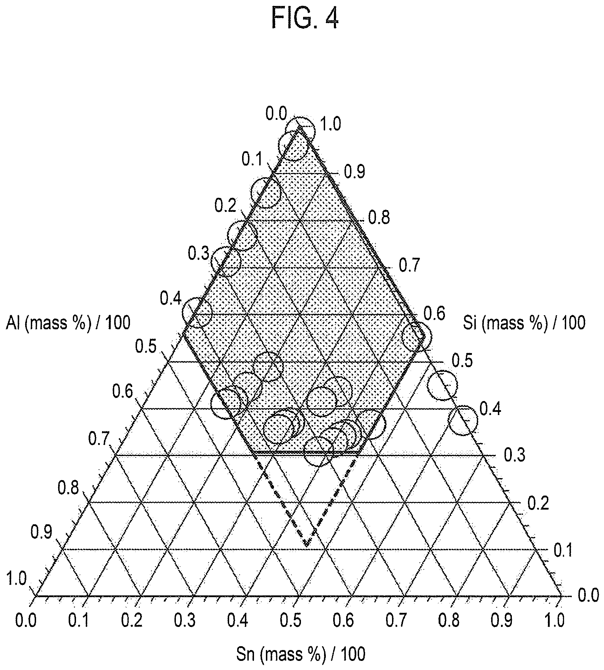

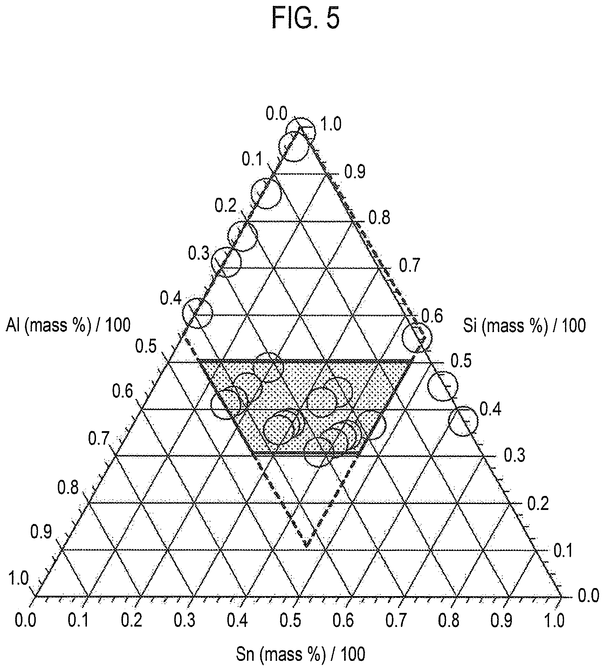

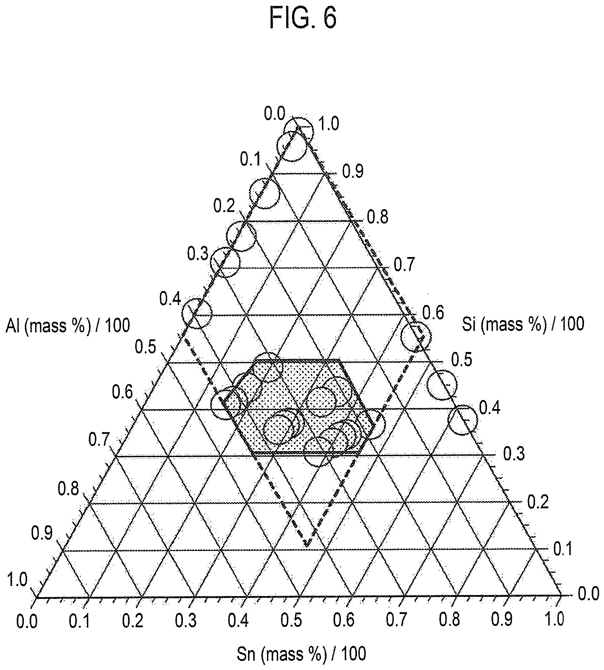

In order to further improve the above-described characteristics of the negative electrode active material, x is preferably 31 or greater as shown in the hatched area of Fig. 4. More preferably, x is in the range from 31 to 50 as shown in the hatched area of Fig. 5. Still more preferably, y is in the range from 15 to 45 and z is in the range from 18 to 43 as shown in the hatched area of Fig. 6. Most preferably, x is in the range from 16 to 45.

As described above, A is impurities (inevitable impurities) derived from the raw materials or the production process other than the three components described above, where a satisfies 0≤a<0.5, preferably 0≤a<0.1.

$Si_xSn_yV_zA_a$

The composition $Si_xSn_yV_zA_a$ obtained by selecting Sn as a first additive element and V as a second additive element as described above can suppress the amorphous-crystal phase transition at the time of the alloying with Li so as to extend cycle life. Accordingly, the negative electrode active material thus obtained has a higher capacity than conventional negative electrode active materials such as carbon-based negative electrode active materials.

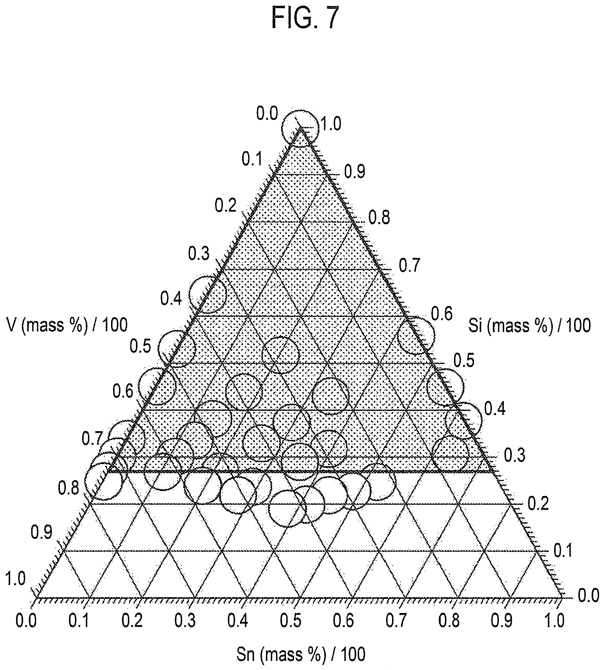

In the alloy composition described above, x is preferably 27 or greater and less than 100, y is preferably greater than 0 and 73 or less, and z is preferably greater than 0 and 73 or less. These numerical ranges correspond to the area indicated by hatching in Fig. 7. The alloy having this composition can not only exhibit a high capacity but also keep a high discharge capacity even after 50 cycles and 100 cycles.

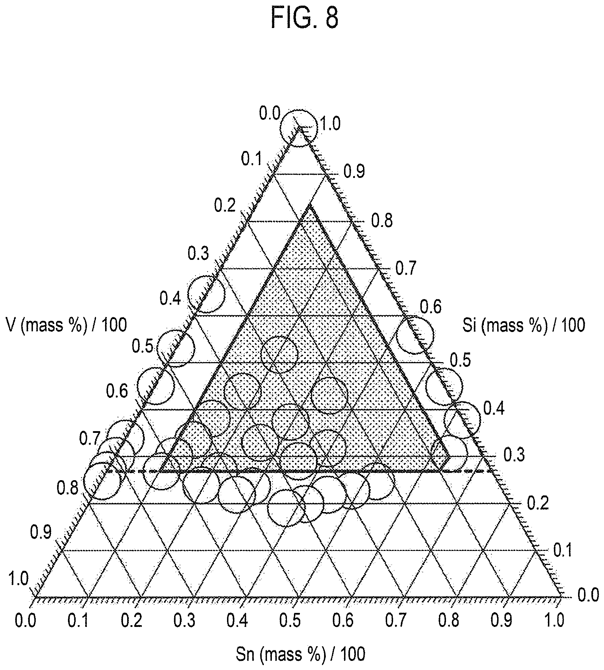

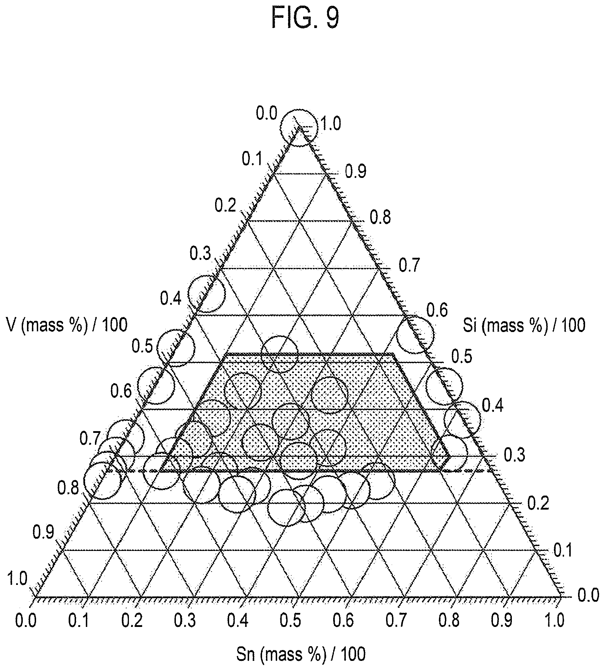

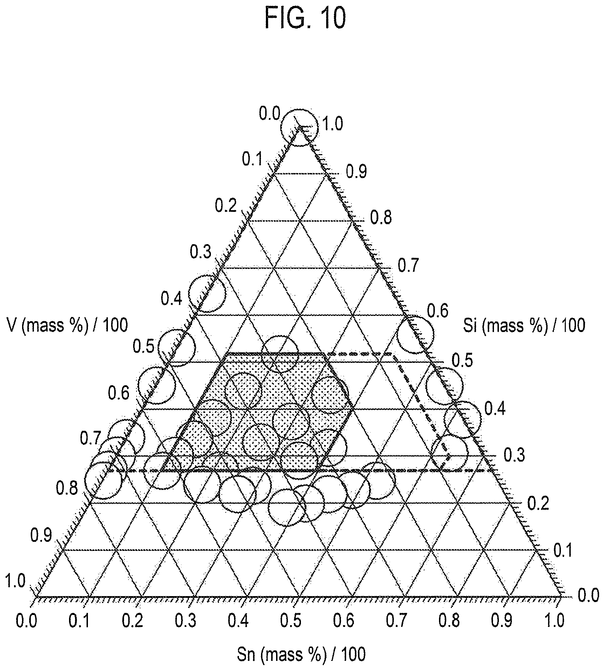

In order to further improve the above-described characteristics of the negative electrode active material, x is preferably in the range from 27 to 84, y is preferably in the range from 10 to 73, and z is preferably in the range from 6 to 73. More preferably, x is in the range from 27 to 84, y is in the range from 10 to 63, and z is in the range from 6 to 63, as shown in the hatched area of Fig. 8. Still more preferably, x is in the range from 27 to 52 as shown in the hatched area of Fig. 9. Particularly preferably, y is in the range from 10 to 52 and z is in the range from 20 to 63 as shown in the hatched area of Fig. 10. Most preferably, y is in the range from 10 to 40.

Here, a satisfies 0≤a<0.5, preferably 0≤a<0.1.

$Si_xSn_yC_zA_a$

The composition $Si_xSn_yC_zA_a$ obtained by selecting Sn as a first additive element and C as a second additive element as described above can suppress the amorphous-crystal phase transition at the time of the alloying with Li so as to extend cycle life. Accordingly, the negative electrode active material thus obtained has a higher capacity than conventional negative electrode active materials such as carbon-based negative electrode active materials.

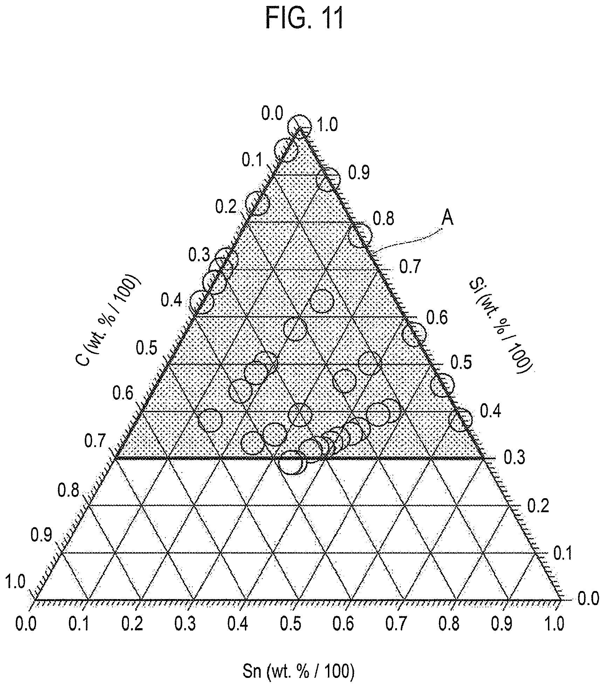

In the alloy composition described above, x is preferably 29 or greater. The numerical ranges of this alloy correspond to the area indicated by sign A in Fig. 11. The alloy having this composition not only can exhibit a high capacity but also can keep a high discharge capacity even after 50 cycles and 100 cycles.

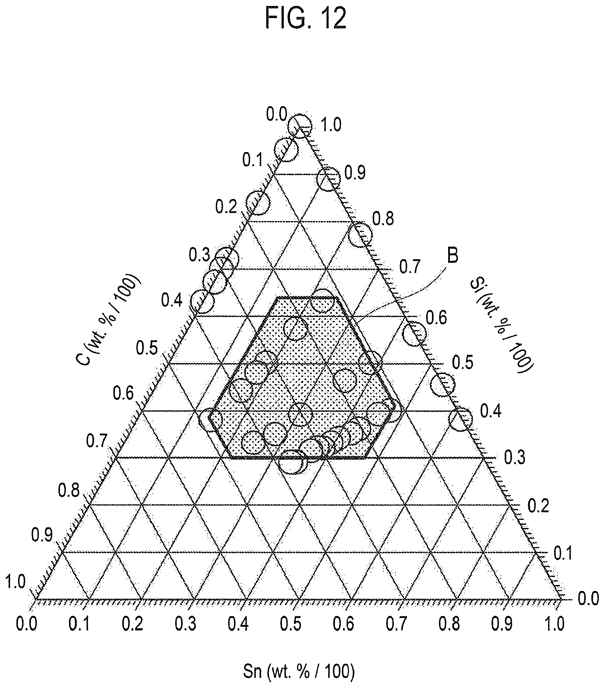

In order to still further improve the above-described characteristics of the negative electrode active material, x is preferably in the range from 29 to 63, y is preferably in the range from 14 to 48, and z is preferably in the range from 11 to 48. These numerical ranges correspond to the area indicated by sign B in Fig. 12.

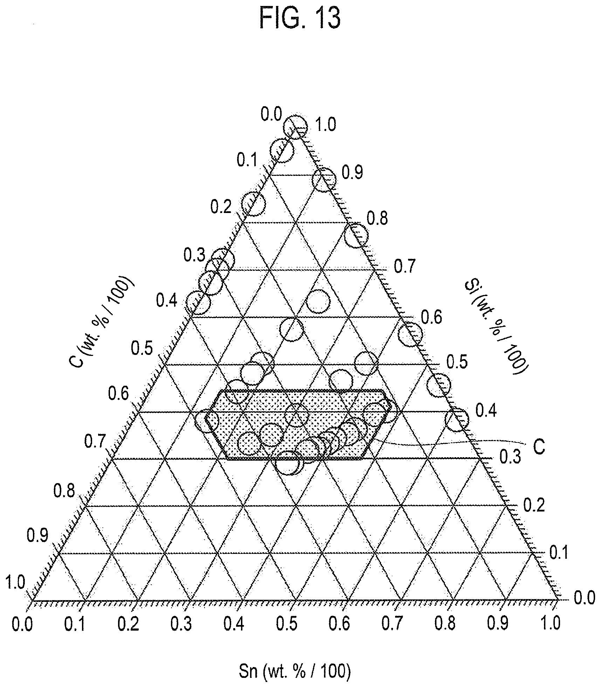

In order to ensure a higher cycle property, x is preferably in the range from 29 to 44, y is preferably in the range from 14 to 48, and z is preferably in the range from 11 to 48. These numerical ranges correspond to the area indicated by sign C in Fig. 13.

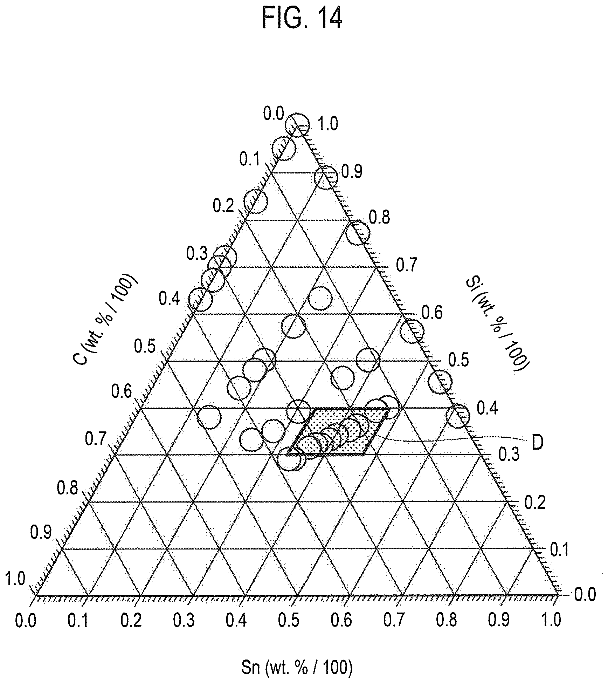

More preferably, x is in the range from 29 to 40, y is in the range from 34 to 48 (and z thus satisfies 12<z<37). These numerical ranges correspond to the area indicated by sign D in Fig. 14.

Here, a satisfies $0 \leq a < 0.5$, preferably $0 \leq a < 0.1$.

(Average Particle Diameter of Si Alloy)

An average particle diameter of the Si alloy is not particularly limited as long as it is substantially identical to that of the negative electrode active material contained in the existing negative electrode active material layer 15. The average particle diameter may be preferably in the range from 1 $\mu$m to 20 $\mu$m in view of higher output power. However, the average particle diameter is not limited to this range and can, of course, deviate therefrom as long as the effects of the present embodiment can effectively be exhibited. The shape of the Si alloy is not particularly limited and may be a spherical shape, an elliptical shape, a cylindrical shape, a polygonal prism shape, a scale shape or an unfixed shape.

Method for Producing Alloy

A method for producing the alloy represented by the composition formula $Si_xSn_yM_zA_a$ according to the present embodiment is not particularly limited, and several kinds of known methods may be used for the production of the alloy. Namely, a variety of production methods may be used because there is little difference in the conditions and characteristics of the alloy produced by the manufacturing methods.

In particular, examples of the method for producing the alloy represented by the composition formula $Si_xSn_yM_zA_a$ in a particle state include a solid phase method, a liquid phase method and a vapor phase method. For example, a mechanical alloying method or an arc plasma melting method may be used. According to these methods for producing the alloy in a particle state, a binder, an electrically-conductive auxiliary agent and a viscosity control solvent may be added to the particles to prepare slurry, so as to form a slurry electrode by use of the slurry thus obtained. These producing methods are superior in terms of mass production and practicality for actual battery electrodes.

Although the predetermined alloy inevitably contained in the negative electrode active material layer was explained above, the negative electrode active material layer may contain other negative electrode active materials. Examples of the negative electrode active materials other than the predetermined alloy include: carbon such as natural graphite, artificial graphite, carbon black, activated carbon, carbon fiber, coke, and soft carbon or hard carbon; an alloy series active material excluding pure metal such as Si and Sn and deviating from the predetermined compositions described above; a metal oxide such as TiO, $Ti_2O_3$ and $TiO_2$ or $SiO_2$, SiO and $SnO_2$; a composite oxide of lithium and transition metal such as $Li_{4/3}Ti_{5/3}O_4$ or $Li_7MnN$; a Li-Pb series alloy; a Li-Al series alloy; and Li. It should be noted that, in order to sufficiently exhibit the effects by use of the predetermined alloy in the negative electrode active material, the content of the predetermined alloy with respect to 100% by mass of the negative electrode active material is preferably in the range from 50 to 100% by mass, more preferably in the range from 80 to 100% by mass, particularly preferably in the range from 90 to 100% by mass, most preferably 100% by mass.

Further, the negative electrode active material layer 15 includes a binder.

(Binder)

The binder inevitably contains a resin having an E elastic modulus in the range from 2.1 GPa to 7.40 GPa exclusive.

As described above, the binder is added to bind the active materials to each other or bind the active material to the current collector to maintain the electrode structure. The binder used in the negative electrode active material layer is not particularly limited, and the same binders listed above used in the positive electrode active material layer may also be used. It should be noted that the binder used in the negative electrode active material layer inevitably contains the resin having the E elastic modulus in the range from 2.1 GPa to 7.40 GPa exclusive. This is because a binder having an E elastic modulus of 2.1 GPa or less or 7.40 GPa or greater cannot follow a volumetric change of the Si alloy so that the binder may not ensure a sufficient discharge capacity. In other words, if the binder, which functions to bind the Si alloy, has an E elastic modulus of 2.1 GPa or less, the binder is too soft to resist pressure applied to the binder at the time of expansion of the Si alloy. In addition, if the binder has an E elastic modulus of 7.40 GPa or greater, the binder is excessively hard so that the expansion of the Si alloy is suppressed at the time of intercalation/release of Li ions, which prevents sufficient introduction of the Li ions into the Si alloy. The resin having the E elastic modulus in the fixed range described above preferably includes one or two or more resins selected from the group consisting of polyimide, polyamide imide, and polyamide, and is particularly preferably polyimide. Note that, in the present specification, the E elastic modulus is conceived to be measured in accordance with a tension test method prescribed in JIS K 7163. When several types of binders are used, the binders are only required to contain at least one resin having the predetermined E elastic modulus described above.

The value of the E elastic modulus of the binder is dependent on the material of the binder, the concentration of slurry (solid-liquid ratio), the level of cross-linking, and heat history such as drying temperature, drying rate and drying time. In the present embodiment, the E elastic modulus of the binder can be regulated in a preferred range by adjusting these conditions.

In order to sufficiently exhibit the effects by use of the resin having the predetermined E elastic modulus in the binder, the content of the resin having the predetermined E elastic modulus with respect to 100% by mass of the binder is preferably in the range from 50 to 100% by mass, more preferably in the range from 80 to 100% by mass, still more preferably in the range from 90 to 100% by mass, particularly preferably in the range from 95 to 100% by mass, most preferably 100% by mass.

The content of the binder in the negative electrode active material layer is not particularly limited as long as it is sufficient to bind the active material. However, the content is preferably in the range from 0.5 to 15% by mass, more preferably in the range from 1 to 10% by mass with respect to the negative electrode active material layer.

(Elements Common to Positive and Negative Electrode Active Material Layers 13,15)

Hereinafter, elements common to both the positive and the negative electrode active material layers 13 and 15 will be explained.

The positive electrode active material layer 13 and the negative electrode active material layer 15 each contain an electrically-conductive auxiliary agent, electrolyte salt (lithium salt) and an ion-conducting polymer as necessary. In addition, the negative electrode active material layer 15 further inevitably contains an electrically-conductive auxiliary agent.

Conductive Auxiliary Agent

The electrically-conductive auxiliary agent is an additive added in order to improve electric conductivity in the positive electrode active material layer or the negative electrode active material layer. The electrically-conductive auxiliary agent may be a carbon material such as carbon black (such as acetylene black), graphite, and vapor-grown carbon fiber. The addition of the electrically-conductive auxiliary agent in the active material layers contributes to effectively establishing an electronic network in the active material layers and improving the output performance of the battery.

The content of the electrically-conductive auxiliary agent in the respective active material layers, with respect to the total amount of each active material layer, is 1% by mass or greater, preferably 3% by mass or greater, more preferably 5% by mass or greater. Also, the content of the electrically-conductive auxiliary agent in the respective active material layers, with respect to the total amount of each active material layer, is 15% by mass or less, preferably 10% by mass or less, more preferably 7% by mass or less. The mixing ratio (the content) of the electrically-conductive auxiliary agent contained in the active material layer, which has low electronic conductivity of the active material per se and can reduce electrode resistance depending on the amount of the electrically-conductive auxiliary agent, is regulated within the range described above so as to achieve the following effects. The electrically-conductive auxiliary agent having the content within the range described above can secure sufficient electronic conductivity without impairing an electrode reaction, prevent a decrease in energy density due to a decrease in electrode density, and even increase the energy density in association with an increase of the electrode density.

The electrically-conductive auxiliary agent and the binder may be replaced with an electrically electrically-conductive binder having both functions of the electrically-conductive auxiliary agent and the binder. Alternatively, the electrically electrically-conductive binder may be used together with one of or both the electrically-conductive auxiliary agent and the binder. The electrically electrically-conductive binder may be a commercially available binder such as TAB-2 manufactured by Hohsen Corp.

Electrolyte Salt (Lithium Salt)

Examples of the electrolyte salt (lithium salt) include $Li(C_2F_5SO_2)_2N$, $LiPF_6$, $LiBF_4$, $LiClO_4$, $LiAsF_6$, and $LiCF_3SO_3$.

Ion-conducting Polymer

Examples of the ion-conducting polymer include a polyethylene oxide (PEO)-based polymer and a polypropylene oxide (PPO)-based polymer.

A mixing ratio of the components contained in each of the positive electrode active material layer and the negative electrode active material layer using the alloy in a particle state is not particularly limited. The mixing ratio may be adjusted by appropriately referring to the known findings on non-aqueous secondary batteries.

The thickness of each active material layer (the active material layer provided on one surface of each current collector) is not particularly limited, and the known findings on batteries may be appropriately referred to. As an example, the thickness of the respective active material layers is generally approximately in the range from 1 $\mu$m to 500 $\mu$m, preferably in the range from 2 $\mu$m to 100 $\mu$m, in view of the intended use of the battery (for example, priority on output, priority on energy) and ion conductivity.

<Current Collectors>

The current collectors 11 and 12 are each made from an electrically electrically-conductive material. The size of the respective current collectors may be determined depending on the intended use of the battery. For example, a current collector having a large area is used for a large-size battery for which high energy density is required.

The thickness of the respective current collectors is not particularly limited. The thickness is generally approximately in the range from 1 $\mu$m to 100 $\mu$m.

The shape of the respective current collectors is not particularly limited. The laminated battery 10 shown in Fig. 1 may use a current collecting foil or a mesh current collector (such as an expanded grid).

Here, a current collecting foil is preferably used when a thin film alloy as the negative electrode active material is directly formed on the negative electrode current collector 12 by a sputtering method.

The material used for the respective current collectors is not particularly limited. For example, a metal or resin in which electrically electrically-conductive filler is added to an electrically electrically-conductive polymer material or a non-electrically-conductive polymer material may be used.

Examples of the metal include aluminum, nickel, iron, stainless steel, titanium and copper. In addition, a clad metal of nickel and aluminum, a clad metal of copper and aluminum, or an alloyed material of these metals combined together, may be preferably used. A foil in which a metal surface is covered with aluminum may also be used. In particular, aluminum, stainless steel, copper and nickel are preferable in view of electron conductivity, battery action potential, and adhesion of the negative electrode active material to each current collector by sputtering.

Examples of the electrically electrically-conductive polymer material include polyaniline, polypyrrole, polythiophene, polyacetylene, polyparaphenylene, polyphenylene vinylene, polyacrylonitrile, and polyoxadiazole. These electrically electrically-conductive polymer materials have the advantage in simplification of the manufacturing process and lightness of the current collector, since these materials have sufficient electric conductivity even if electrically electrically-conductive filler is not added thereto.

Examples of the non-electrically-conductive polymer material include polyethylene (PE; such as high-density polyethylene (HDPE) and low-density polyethylene (LDPE)), polypropylene (PP), polyethylene terephthalate (PET), polyether nitrile (PEN), polyimide (PI), polyamide imide (PAI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVdF), and polystyrene (PS). These non-electrically-conductive polymer materials have high potential resistance or solvent resistance.

The electrically electrically-conductive polymer material or the non-electrically-conductive polymer material may include electrically electrically-conductive filler that is added as necessary. In particular, when the resin serving as a substrate of the current collector only contains a non-electrically-conductive polymer, the electrically electrically-conductive filler is essential to impart electric conductivity to the resin.

The electrically electrically-conductive filler is not particularly limited as long as it is a substance having electric conductivity. Examples of the material having high electric conductivity, potential resistance or lithium ion insulation property, include metal and electrically electrically-conductive carbon. The metal is not particularly limited; however, the metal is preferably at least one element selected from the group consisting of Ni, Ti, Al, Cu, Pt, Fe, Cr, Sn, Zn, In, Sb, and K, or an alloy or metal oxide containing these metals. The electrically electrically-conductive carbon is not particularly limited; however, the electrically electrically-conductive carbon is preferably at least one material selected from the group consisting of acetylene black, Vulcan, Black Pearls, carbon nanofiber, Ketjenblack, carbon nanotube, carbon nanohorn, carbon nanoballoon, and fullerene.

The amount of the electrically electrically-conductive filler added in the respective current collectors is not particularly limited as long as it imparts sufficient electric conductivity to the current collectors. In general, the amount thereof is approximately in the range from 5 to 35% by mass.

<Electrolyte Layer>

A liquid electrolyte or a polymer electrolyte may be used for an electrolyte contained in the electrolyte layer 17.

The liquid electrolyte has a constitution in which electrolyte salt (lithium salt) is dissolved in an organic solvent. The organic solvent may be carbonate such as ethylene carbonate (EC), propylene carbonate (PC), butylene carbonate (BC), vinylene carbonate (VC), dimethyl carbonate (DMC), diethyl carbonate (DEC), ethyl methyl carbonate (EMC), or methyl propyl carbonate (MPC).

The lithium salt may be a compound that can be added to the active material layers in the respective electrodes, such as $Li(CF_3SO_2)_2N$, $Li(C_2F_5SO_2)_2N$, $LiPF_6$, $LiBF_4$, $LiAsF_6$, $LiTaF_6$, $LiClO_4$, or $LiCF_3SO_3$.

The polymer electrolyte is divided into two types; a gel electrolyte containing an electrolysis solution and an intrinsic polymer electrolyte not containing an electrolysis solution.

The gel electrolyte has a constitution in which the liquid electrolyte (electrolysis solution) is injected into a matrix polymer containing an ion-conducting polymer. The use of the gel polymer electrolyte has the advantage of decreasing fluidity of the electrolyte so as to easily interrupt ion conduction between the respective layers.

Examples of the ion-conducting polymer used for the matrix polymer include polyethylene oxide (PEO), polypropylene oxide (PPO), and a copolymer thereof. In such a polyalkylene oxide polymer, electrolyte salt such as lithium salt can be dissolved sufficiently.

The content ratio of the liquid electrolyte (the electrolysis solution) in the gel electrolyte should not be particularly limited, but is preferably in the range from several % by mass to 98% by mass in view of ion conductivity or the like. According to the present embodiment, the gel electrolyte exhibits better effects particularly when containing a large amount of the electrolysis solution of which the content ratio is 70% by mass or greater.

Here, a separator may be used in the respective electrolyte layers when the electrolyte layers contain the liquid electrolyte, the gel electrolyte or the intrinsic polymer electrolyte. Examples of the specific configuration of the separator (including nonwoven fabric) include a microporous film or a porous flat plate made from polyolefin such as polyethylene and polypropylene, and a nonwoven fabric.

The intrinsic polymer electrolyte has a constitution in which supporting salt (lithium salt) is dissolved in the matrix polymer, but no organic solvent serving as a plasticizer is contained therein. Thus, the use of the intrinsic polymer electrolyte contributes to reducing the risk of liquid leakage from the battery and thereby enhancing the reliability of the battery.

The matrix polymer of the gel electrolyte or the intrinsic polymer electrolyte can exhibit high mechanical strength when a cross-linked structure is formed. The cross-linked structure may be formed in a manner such that a polymerizable polymer used for polymer electrolyte formation (for example, PEO and PPO) is subjected to polymerization, such as thermal polymerization, ultraviolet polymerization, radiation polymerization, or electron beam polymerization, by use of an appropriate polymerization initiator.

<Current Collecting Plate and Lead>

Current collecting plates may be used to extract a current outward from the battery. Such current collecting plates are electrically connected to the current collectors or leads and exposed to the outside of the laminated sheet as a battery exterior member.

The material constituting the current collecting plates is not particularly limited and may be a highly electrically electrically-conductive material conventionally used for current collecting plates for lithium ion secondary batteries. For example, the constituent material for the current collecting plates is preferably a metallic material such as aluminum, copper, titanium, nickel, stainless steel (SUS), or an alloy thereof, more preferably aluminum or copper in view of lightness, corrosion resistance and high electric conductivity. The positive electrode current collecting plate and the negative electrode current collecting plate may be made from the same material or may be made from different materials.

A positive terminal lead and a negative terminal lead are used as necessary. The positive terminal lead and the negative terminal lead may be terminal leads conventionally used for lithium ion secondary batteries. Each part exposed to the outside of the battery exterior member 29 is preferably covered with, for example, a heat shrinkable tube having a heat resistant insulating property so as not to exert influence on surrounding products (such as components in the vehicle, in particular, electronic devices) due to a short circuit because of contact with peripheral devices or wires.

<Battery Exterior Member>

As the battery exterior member 29, a known metal can casing may be used. Alternatively, a sac-like casing capable of covering the power generation element and formed of a laminated film containing aluminum may be used. The laminated film may be a film having a three-layer structure in which PP, aluminum and nylon are laminated in this order, but is not particularly limited thereto. The laminated film is preferable in view of higher output power and cooling performance, and suitability for use in batteries used for large devices such as EV and HEV.

The lithium ion secondary battery described above may be manufactured by a conventionally-known method.

<Appearance of Lithium Ion Secondary Battery>

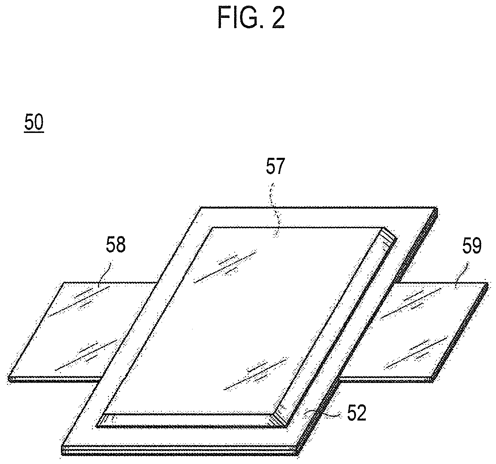

Fig. 2 is a perspective view showing an appearance of a laminated flat lithium ion secondary battery.

As shown in Fig. 2, a laminated flat lithium ion secondary battery 50 has a flat rectangular shape, and a positive electrode current collecting plate 58 and a negative electrode current collecting plate 59 for extracting electricity are exposed to the outside of the battery on both sides. A power generation element 57 is enclosed by a battery exterior member 52 of the lithium ion secondary battery 50, and the periphery thereof is thermally fused. The power generation element 57 is tightly sealed in a state where the positive electrode current collecting plate 58 and the negative electrode current collecting plate 59 are exposed to the outside of the battery. The power generation element 57 corresponds to the power generation element 21 of the lithium ion secondary battery (the laminated battery) 10 shown in Fig. 1. The power generation element 57 is obtained in a manner such that the plural single cell layers (single cells) 19 are stacked on top of each other, each single cell layer 19 being formed of the positive electrode (positive electrode active material layer 13), the electrolyte layer 17 and the negative electrode (negative electrode active material layer 15).

The lithium ion secondary battery is not limited to the laminated flat battery (laminated cell). A wound lithium ion battery may include, without particular limitation, a battery having a cylindrical shape (coin cell), a prismatic shape (prismatic cell) or a rectangular flat shape obtained by deforming the cylindrical shape, and a cylinder-like cell. A laminated film or a conventional cylinder can (metal can) may be used as an exterior material for the cylindrical shape battery or the prismatic shape battery without particular limitation. Preferably, a power generation element of each battery is enclosed by an aluminum laminated film. Such a configuration can contribute to a reduction in weight.

The exposed state of the positive electrode current collecting plate 58 and the negative electrode current collecting plate 59 shown in Fig. 2 is not particularly limited. The positive electrode current collecting plate 58 and the negative electrode current collecting plate 59 may protrude from the same side. Alternatively, the positive electrode current collecting plate 58 and the negative electrode current collecting plate 59 may each be divided into some pieces to protrude separately from each side. Thus, the current collecting plates are not limited to the configuration shown in Fig. 2. In the wound lithium ion battery, a terminal may be formed by use of, for example, a cylinder can (metal can) in place of the current collecting plate.

As described above, the negative electrode and the lithium ion secondary battery using the negative electrode active material for a lithium ion secondary battery according to the present embodiment can suitably be used as a large-capacity power source for an electric vehicle, a hybrid electric vehicle, a fuel cell vehicle, or a hybrid fuel cell vehicle. Thus, the negative electrode and the lithium ion secondary battery can suitably be applied to a power source for driving a vehicle and an auxiliary power source that are required to have high volumetric energy density and high volumetric output density.

The lithium ion battery was exemplified above as the electric device in the present embodiment. However, the present embodiment is not limited to this and may be applicable to secondary batteries of different types and, further, to primary batteries. In addition, the present embodiment may be applicable not only to batteries but also to capacitors.

EXAMPLES

Hereinafter, the present invention will be explained in more detail with reference to examples; however, the scope of the present invention is not limited only to the following examples.

First, as reference examples, each Si alloy represented by the chemical formula (1) contained in the negative electrode for an electric device according to the present invention was subjected to performance evaluation.

(Reference Example A): Performance Evaluation of $Si_xSn_yAl_zA_a$

[1] Production of Negative Electrode

As a sputtering apparatus, an independently controllable ternary DC magnetron sputtering apparatus (manufactured by Yamato-Kiki Industrial Co., Ltd.; combinatorial sputter coating apparatus; gun-sample distance: approximately 100 mm) was used. Thin films of negative electrode active material alloys having various compositions were each formed on a substrate (a current collector) made of a nickel foil having a thickness of 20 $\mu$m under the following conditions, so as to obtain 23 negative electrode samples (Reference examples 1 to 14 and Comparative Reference examples 1 to 9).

(1) Targets (manufactured by Kojundo Chemical Laboratory Co., Ltd.; purity: 4N)

Si: diameter of 50.8 mm; thickness of 3 mm (with a backing plate made of oxygen-free copper having a thickness of 2 mm)
Sn: diameter of 50.8 mm; thickness of 5 mm
Al: diameter of 50.8 mm; thickness of 3 mm

(2) Conditions of Film Formation

Base pressure: up to $7 \times 10^{-6}$ Pa
Sputtering gas: Ar (99.9999% or higher)
Sputtering gas introduction amount: 10 sccm
Sputtering pressure: 30 mTorr
DC power source: Si (185 W), Sn (0 to 40 W), Al (0 to 150 W)
Pre-sputtering time: 1 min.
Sputtering time: 10 min.
Substrate temperature: room temperature (25°C)

In particular, the negative electrode samples including the thin alloy films having various compositions were obtained in such a manner as to use the Si target, the Sn target and the Al target described above, fix the sputtering time for 10 minutes, change the power levels of the DC power source for each target within the above-described ranges, and form the thin alloy films in an amorphous state on the Ni substrates.

As for the sample preparation, for example, in Reference Example 4, the DC power source 1 (Si target) was set to 185 W, the DC power source 2 (Sn target) was set to 25 W, and the DC power source 3 (Al target) was set to 130 W. In Comparative Reference Example 2, the DC power source 1 (Si target) was set to 185 W, the DC power source 2 (Sn target) was set to 30 W, and the DC power source 3 (Al target) was set to 0 W. In Comparative Reference Example 5, the DC power source 1 (Si target) was set to 185 W, the DC power source 2 (Sn target) was set to 0 W, and the DC power source 3 (Al target) was set to 78 W.

Table 1 and Fig. 3 to Fig. 6 show the respective component compositions of the thin alloy films thus obtained. The obtained thin alloy films were analyzed by using the following analysis method and analysis device.

(3) Analysis Method

Composition analysis: SEM-EDX analysis (manufactured by JEOL Ltd.), EPMA analysis (manufactured by JEOL Ltd.)
Film thickness measurement (for calculating sputtering rate): film thickness meter (manufactured by Tokyo Instruments, Inc.)
Film state analysis: Raman spectroscopic analysis (manufactured by Bruker Corporation)

[2] Production of Battery

Each of the negative electrode samples obtained as described above was placed to face the counter electrode made of a lithium foil (manufactured by Honjo Metal Co., Ltd.; diameter: 15 mm; thickness: 200 $\mu$m) via a separator (Celgard 2400 manufactured by Celgard, LLC.), and an electrolysis solution was injected therein so as to prepare a CR2032 type coin cell for each example.

The electrolysis solution used was prepared in a manner such that $LiPF_6$ (lithium hexafluorophosphate) was dissolved, at a concentration of 1 M, into a mixed non-aqueous solvent in which ethylene carbonate (EC) and diethyl carbonate (DEC) were mixed in a volume ratio of 1:1.

[3] Charge-discharge Test of Battery

The following charge-discharge test was performed on the respective batteries obtained as described above.

The respective batteries were charged and discharged by use of a charge-discharge tester (HJ0501SM8A manufactured by Hokuto Denko Corporation) in a thermostat bath (PFU-3K manufactured by ESPEC Corp.) set at 300 K (27°C). In particular, each battery was charged at 0.1 mA from 2 V to 10 mV in a constant-current/constant-voltage mode during charging (in the process of Li intercalation to the negative electrode as an evaluation target). Subsequently, each cell was discharged at 0.1 mA from 10 mV to 2 V in a constant-current mode during discharging (in the process of Li release from the negative electrode). This procedure, which is regarded as a single charge-discharge cycle, was repeated 100 times.

Thereafter, a discharge capacity at each of the 50th cycle and the 100th cycle was obtained, and a retention rate at each of the 50th cycle and the 100th cycle with respect to the discharge capacity at the 1st cycle was calculated.

Table 1 shows the results thus obtained. The discharge capacity was calculated per alloy weight. Note that, in Table 1, "discharge capacity (mAh/g)" represents a value per pure Si or alloy weight and represents a capacity when Li reacts to the Si-Sn-M alloy (Si-Sn alloy, pure Si or Si-Sn alloy). Here, "the initial capacity" described in the present specification corresponds to "the discharge capacity (mAh/g)" of the initial cycle (at the 1st cycle).

In addition, "the discharge capacity retention rate (%)" at each of the 50th cycle and the 100th cycle represents an index for "how much of the initial capacity is maintained." The discharge capacity retention rate (%) was calculated according to the following formula.

[Math. 1]

$$\text{Discharge capacity retention rate (\%)} = (\text{discharge capacity at 50th cycle or 100th cycle})/(\text{discharge capacity at 1st cycle}) \times 100$$

[Table 1-1]

| | Composition | | | 1st Cycle | 50th Cycle | 100th Cycle |
|---|---|---|---|---|---|---|
| | Si (%) | Sn (%) | Al (%) | Discharge Capacity (mAh/g) | Discharge Capacity Retention Rate (%) | Discharge Capacity Retention Rate (%) |
| Reference Example 1 | 50 | 19 | 31 | 1753 | 92 | 55 |
| Reference Example 2 | 45 | 17 | 38 | 1743 | 93 | 57 |
| Reference Example 3 | 42 | 16 | 42 | 1720 | 95 | 58 |
| Reference Example 4 | 41 | 16 | 43 | 1707 | 95 | 61 |
| Reference Example 5 | 44 | 35 | 21 | 2077 | 95 | 55 |
| Reference Example 6 | 42 | 33 | 25 | 1957 | 93 | 55 |
| Reference Example 7 | 38 | 29 | 33 | 1949 | 93 | 55 |
| Reference Example 8 | 37 | 29 | 34 | 1939 | 93 | 56 |
| Reference Example 9 | 36 | 28 | 36 | 1994 | 94 | 60 |
| Reference Example 10 | 37 | 45 | 18 | 2004 | 96 | 56 |
| Reference Example 11 | 35 | 41 | 24 | 1996 | 95 | 55 |
| Reference Example 12 | 34 | 41 | 25 | 1985 | 95 | 56 |
| Reference Example 13 | 33 | 40 | 27 | 1893 | 96 | 56 |

(continued)

| | Composition | | | 1st Cycle | 50th Cycle | 100th Cycle |
|---|---|---|---|---|---|---|
| | Si (%) | Sn (%) | Al (%) | Discharge Capacity (mAh/g) | Discharge Capacity Retention Rate (%) | Discharge Capacity Retention Rate (%) |
| Reference Example 14 | 31 | 38 | 31 | 1880 | 96 | 62 |

[Table 1-2]

| | Composition | | | 1st Cycle | 50th Cycle | 100th Cycle |
|---|---|---|---|---|---|---|
| | Si (%) | Sn (%) | Al (%) | Discharge Capacity (mAh/g) | Discharge Capacity Retention Rate (%) | Discharge Capacity Retention Rate (%) |
| Comparative Reference Example 1 | 100 | 0 | 0 | 3232 | 47 | 22 |
| Comparative Reference Example 2 | 56 | 44 | 0 | 1817 | 91 | 42 |
| Comparative Reference Example 3 | 45 | 55 | 0 | 1492 | 91 | 42 |
| Comparative Reference Example 4 | 38 | 62 | 0 | 1325 | 91 | 42 |
| Comparative Reference Example 5 | 61 | 0 | 39 | 1747 | 41 | 39 |
| Comparative Reference Example 6 | 72 | 0 | 28 | 2119 | 45 | 38 |
| Comparative Reference Example 7 | 78 | 0 | 22 | 2471 | 45 | 27 |
| Comparative Reference Example 8 | 87 | 0 | 13 | 2805 | 44 | 17 |
| Comparative Reference Example 9 | 97 | 0 | 3 | 3031 | 47 | 17 |

The tests revealed according to Table 1 that the batteries of Reference examples 1 to 14 each showed a good balance of the discharge capacity at the first cycle, the discharge capacity retention rate at the 50th cycle and the discharge capacity retention rate at the 100th cycle. In particular, the good balance was achieved when Si was 12% by mass or greater and less than 100% by mass, Sn was greater than 0% by mass and 45% by mass or less, and Al was greater than 0% by mass and 43% by mass or less. On the other hand, the batteries of Comparative Reference examples 1 to 9 showed a considerable decrease of the discharge capacity retention rate even through the discharge capacity at the 1st cycle was high.

In summary, the following results were confirmed with regard to the batteries of the reference examples each using the Si-Sn-Al alloy as a negative electrode active material including the compositions within the predetermined ranges according to the present invention. In particular, it was confirmed that the batteries each had a high initial capacity exceeding 1700 mAh/g, showed discharge capacity retention rates of 92% or higher at the 50th cycle and 55% or higher even at the 100th cycle, and exhibited a good balance of the capacity and the cycle durability. On the other hand, both the initial capacity and the cycle durability in each of the batteries of the comparative reference examples showed values lower than the values in the respective reference examples. Especially, it was confirmed that the nearly pure Si alloy tended to have a high capacity but have a poor cycle property. In addition, it was confirmed that the alloy having a high Sn content tended to have a relatively high cycle property but have a poor initial capacity.

(Reference Example B): Performance Evaluation of $Si_xSn_yV_zA_a$

[1] Production of Negative Electrode

The same production procedure in Reference Example 1 was repeated so as to obtain 32 negative electrode samples (Reference examples 15 to 27 and Comparative Reference examples 10 to 28) except that "Al: diameter of 50.8 mm; thickness of 3 mm" of the target in item (1) of Reference Example 1 was changed to "V: diameter of 50.8 mm; thickness of 3 mm", and "Sn (0 to 40 W), Al (0 to 150 W)" of the DC power source in item (2) was changed to "Sn (0 to 50 W), V (0 to 150 W)".

As for the sample preparation in item (2), for example, in Reference Example 25, the DC power source 1 (Si target) was set to 185 W, the DC power source 2 (Sn target) was set to 30 W, and the DC power source 3 (V target) was set to 140 W. In Comparative Reference Example 19, the DC power source 1 (Si target) was set to 185 W, the DC power source 2 (Sn target) was set to 30 W, and the DC power source 3 (V target) was set to 0 W. In Comparative Reference Example 25, the DC power source 1 (Si target) was set to 185 W, the DC power source 2 (Sn target) was set to 0 W, and the DC power source 3 (V target) was set to 80 W.

Table 2 and Fig. 7 to Fig. 10 show the respective component compositions of the thin alloy films thus obtained.

[2] Production of Battery

A CR2032 type coin cell was prepared for each example in the same manner as Reference Example 1.

[3] Charge-discharge Test of Battery

The charge-discharge test was performed on the respective batteries in the same manner as Reference Example 1. Table 2 shows the results thus obtained.

[Table 2-1]

| | Composition | | | 1st Cycle | 50th Cycle | 100th Cycle |
|---|---|---|---|---|---|---|
| | Si (%) | Sn (%) | V (%) | Discharge Capacity (mAh/g) | Discharge Capacity Retention Rate (%) | Discharge Capacity Retention Rate (%) |
| Reference Example 15 | 43 | 34 | 23 | 1532 | 93 | 47 |
| Reference Example 16 | 37 | 29 | 32 | 1316 | 92 | 46 |
| Reference Example 17 | 33 | 26 | 41 | 1087 | 92 | 49 |
| Reference Example 18 | 27 | 21 | 52 | 832 | 92 | 46 |

(continued)

| | Composition | | | 1st Cycle | 50th Cycle | 100th Cycle |
|---|---|---|---|---|---|---|
| | Si (%) | Sn (%) | V (%) | Discharge Capacity (mAh/g) | Discharge Capacity Retention Rate (%) | Discharge Capacity Retention Rate (%) |
| Reference Example 19 | 32 | 39 | 29 | 1123 | 92 | 47 |
| Reference Example 20 | 29 | 35 | 36 | 1023 | 93 | 48 |
| Reference Example 21 | 52 | 20 | 28 | 1682 | 92 | 45 |
| Reference Example 22 | 44 | 17 | 39 | 1356 | 92 | 47 |
| Reference Example 23 | 38 | 14 | 48 | 1103 | 93 | 48 |
| Reference Example 24 | 34 | 13 | 53 | 931 | 93 | 50 |
| Reference Example 25 | 30 | 11 | 59 | 821 | 94 | 51 |
| Reference Example 26 | 27 | 10 | 63 | 712 | 92 | 44 |
| Reference Example 27 | 31 | 63 | 6 | 1135 | 92 | 46 |

[Table 2-2]

| | Composition | | | 1st Cycle | 50th Cycle | 100th Cycle |
|---|---|---|---|---|---|---|
| | Si (%) | Sn (%) | V (%) | Discharge Capacity (mAh/g) | Discharge Capacity Retention Rate (%) | Discharge Capacity Retention Rate (%) |
| Comparative Reference Example 10 | 25 | 19 | 56 | 749 | 89 | 36 |
| Comparative Reference Example 11 | 24 | 29 | 47 | 795 | 90 | 38 |
| Comparative Reference Example 12 | 22 | 27 | 51 | 680 | 86 | 28 |

(continued)

| | Composition | | | 1st Cycle | 50th Cycle | 100th Cycle |
|---|---|---|---|---|---|---|
| | Si (%) | Sn (%) | V (%) | Discharge Capacity (mAh/g) | Discharge Capacity Retention Rate (%) | Discharge Capacity Retention Rate (%) |
| Comparative Reference Example 13 | 25 | 52 | 23 | 872 | 88 | 34 |
| Comparative Reference Example 14 | 23 | 48 | 29 | 809 | 88 | 33 |
| Comparative Reference Example 15 | 22 | 44 | 34 | 733 | 86 | 28 |
| Comparative Reference Example 16 | 20 | 41 | 39 | 685 | 78 | 18 |
| Comparative Reference Example 17 | 19 | 38 | 43 | 563 | 73 | 11 |
| Comparative Reference Example 18 | 100 | 0 | 0 | 3232 | 47 | 22 |
| Comparative Reference Example 19 | 56 | 44 | 0 | 1817 | 91 | 42 |
| Comparative Reference Example 20 | 45 | 55 | 0 | 1492 | 91 | 42 |
| Comparative Reference Example 21 | 38 | 62 | 0 | 1325 | 91 | 42 |
| Comparative Reference Example 22 | 65 | 0 | 35 | 1451 | 85 | 40 |
| Comparative Reference Example 23 | 53 | 0 | 47 | 1182 | 85 | 42 |
| Comparative Reference Example 24 | 45 | 0 | 55 | 986 | 83 | 39 |
| Comparative Reference Example 25 | 34 | 0 | 66 | 645 | 90 | 44 |
| Comparative Reference Example 26 | 30 | 0 | 70 | 564 | 88 | 44 |

(continued)

| | Composition | | | 1st Cycle | 50th Cycle | 100th Cycle |
|---|---|---|---|---|---|---|
| | Si (%) | Sn (%) | V (%) | Discharge Capacity (mAh/g) | Discharge Capacity Retention Rate (%) | Discharge Capacity Retention Rate (%) |
| Comparative Reference Example 27 | 27 | 0 | 73 | 495 | 86 | 36 |
| Comparative Reference Example 28 | 25 | 0 | 75 | 366 | 86 | 39 |

The tests revealed according to Table 2 that the batteries of the reference examples each showed a good balance of the discharge capacity at the first cycle, the discharge capacity retention rate at the 50th cycle and the discharge capacity retention rate at the 100th cycle. In particular, the good balance was achieved when Si was 27% by mass or greater and less than 100% by mass, Sn was greater than 0% by mass and 73% by mass or less, and V was greater than 0% by mass and 73% by mass or less. On the other hand, the batteries of the comparative reference examples showed a considerable decrease of the discharge capacity retention rate even through the discharge capacity at the 1st cycle was high.

In summary, the following results were confirmed with regard to the batteries of the reference examples. In particular, it was confirmed that the batteries each had a high initial capacity of 712 mAh/g or greater, and showed discharge capacity retention rates of 92% or higher after 50 cycles and 44% or higher after 100 cycles.

(Reference Example C): Performance Evaluation of $Si_xSn_yC_zA_a$

[1] Production of Negative Electrode

The same production procedure in Reference Example 1 was repeated so as to obtain 34 negative electrode samples (Reference examples 28 to 49 and Comparative Reference examples 29 to 40) except that "Al: diameter of 50.8 mm; thickness of 3 mm" of the target in item (1) of Reference Example 1 was changed to "C: diameter of 50.8 mm; thickness of 3 mm (with a backing plate made of oxygen-free copper having a thickness of 2 mm), and "Al (0 to 150 W)" of the DC power source in item (2) was changed to "C (0 to 150 W)".

As for the sample preparation in item (2), for example, in Reference Example 43, the DC power source 1 (Si target) was set to 185 W, the DC power source 2 (Sn target) was set to 35 W, and the DC power source 3 (C target) was set to 110 W. In Comparative Reference Example 30, the DC power source 1 (Si target) was set to 185 W, the DC power source 2 (Sn target) was set to 22 W, and the DC power source 3 (C target) was set to 0 W. In Comparative Reference Example 35, the DC power source 1 (Si target) was set to 185 W, the DC power source 2 (Sn target) was set to 0 W, and the DC power source 3 (C target) was set to 30 W.

Table 3 and Fig. 11 show the respective component compositions of the thin alloy films thus obtained.

[2] Production of Battery

A CR2032 type coin cell was prepared for each example in the same manner as Reference Example 1.

[3] Charge-discharge Test of Battery

The charge-discharge test was performed on the respective batteries in the same manner as Reference Example 1. Table 3 shows the results thus obtained.

[Table 3-1]

| | | Composition | | | 1st Cycle | 50th Cycle | 100th Cycle |
|---|---|---|---|---|---|---|---|
| | | Si (%) | Sn (%) | C (%) | Discharge Capacity (mAh/g) | Discharge Capacity Retention Rate (%) | Discharge Capacity Retention Rate (%) |
| Reference Example 28 | | 63 | 23 | 14 | 2134 | 92 | 45 |
| Reference Example 29 | | 57 | 21 | 22 | 2005 | 92 | 47 |
| Reference Example 30 | | 50 | 19 | 31 | 1632 | 92 | 48 |
| Reference Example 31 | | 48 | 18 | 34 | 1628 | 92 | 49 |
| Reference Example 32 | | 44 | 17 | 39 | 1571 | 92 | 50 |
| Reference Example 33 | | 38 | 14 | 48 | 1262 | 92 | 51 |
| Reference Example 34 | | 50 | 39 | 11 | 1710 | 92 | 48 |
| Reference Example 35 | | 46 | 36 | 18 | 1582 | 96 | 49 |
| Reference Example 36 | | 39 | 31 | 30 | 1310 | 95 | 52 |
| Reference Example 37 | | 35 | 28 | 37 | 1250 | 92 | 52 |
| Reference Example 38 | | 33 | 25 | 42 | 1089 | 92 | 52 |
| Reference Example 39 | | 40 | 48 | 12 | 1741 | 97 | 55 |
| Reference Example 40 | | 39 | 46 | 15 | 1685 | 98 | 56 |
| Reference Example 41 | | 36 | 44 | 20 | 1583 | 97 | 57 |
| Reference Example 42 | | 35 | 43 | 22 | 1525 | 96 | 55 |

(continued)

| | Composition | | | 1st Cycle | 50th Cycle | 100th Cycle |
|---|---|---|---|---|---|---|
| | Si (%) | Sn (%) | C (%) | Discharge Capacity (mAh/g) | Discharge Capacity Retention Rate (%) | Discharge Capacity Retention Rate (%) |
| Reference Example 43 | 34 | 41 | 25 | 1466 | 99 | 60 |
| Reference Example 44 | 33 | 40 | 27 | 1456 | 97 | 57 |
| Reference Example 45 | 32 | 39 | 29 | 1423 | 96 | 57 |
| Reference Example 46 | 32 | 38 | 30 | 1403 | 97 | 58 |
| Reference Example 47 | 31 | 37 | 32 | 1381 | 98 | 60 |
| Reference Example 48 | 29 | 35 | 36 | 1272 | 97 | 60 |
| Reference Example 49 | 29 | 34 | 37 | 1184 | 98 | 59 |

[Table 3-2]

| | Composition | | | 1st Cycle | 50th Cycle | 100th Cycle |
|---|---|---|---|---|---|---|
| | Si (%) | Sn (%) | C (%) | Discharge Capacity (mAh/g) | Discharge Capacity Retention Rate (%) | Discharge Capacity Retention Rate (%) |
| Comparative Reference Example 29 | 100 | 0 | 0 | 3232 | 47 | 22 |
| Comparative Reference Example 30 | 89 | 11 | 0 | 3149 | 78 | 36 |
| Comparative Reference Example 31 | 77 | 23 | 0 | 2622 | 84 | 38 |
| Comparative Reference Example 32 | 56 | 44 | 0 | 1817 | 91 | 42 |
| Comparative Reference Example 33 | 45 | 55 | 0 | 1492 | 91 | 42 |

(continued)

| | Composition | | | 1st Cycle | 50th Cycle | 100th Cycle |
|---|---|---|---|---|---|---|
| | Si (%) | Sn (%) | C (%) | Discharge Capacity (mAh/g) | Discharge Capacity Retention Rate (%) | Discharge Capacity Retention Rate (%) |
| Comparative Reference Example 34 | 38 | 62 | 0 | 1325 | 91 | 42 |
| Comparative Reference Example 35 | 95 | 0 | 5 | 3284 | 58 | 37 |
| Comparative Reference Example 36 | 84 | 0 | 16 | 3319 | 64 | 38 |
| Comparative Reference Example 37 | 72 | 0 | 28 | 3319 | 51 | 29 |
| Comparative Reference Example 38 | 70 | 0 | 30 | 3409 | 68 | 33 |
| Comparative Reference Example 39 | 67 | 0 | 33 | 3414 | 54 | 27 |
| Comparative Reference Example 40 | 63 | 0 | 37 | 3360 | 59 | 27 |

In summary, it was confirmed that the batteries of the reference examples each using the Si-Sn-C alloy as a negative electrode active material containing 29% by mass or greater of Si and the residue of Sn, C and inevitable impurities, each had a high initial capacity exceeding at least 1000 mAh/g, and showed discharge capacity retention rates of 92% or higher after 50 cycles and 45% or higher even after 100 cycles.

Next, a negative electrode for an electric device including a negative electrode active material layer containing a negative electrode active material using $Si_{41}Sn_{16}Al_{43}$ selected among the Si alloys described above and further containing various types of binders, was subjected to performance evaluation in each of Examples.

Here, the other alloys used in the present invention other than $Si_{41}Sn_{16}Al_{43}$ (the alloys of $Si_xSn_yAl_zA_a$, $Si_xSn_y$-$V_zA_a$ and $Si_xSn_yC_zA_a$ other than $Si_{41}Sn_{16}Al_{43}$) can obtain the results identical or similar to those of the following examples using $Si_{41}Sn_{16}Al_{43}$. The reason thereof is that, as shown in the reference examples, the other alloys used in the present invention have characteristics similar to those of $Si_{41}Sn_{16}Al_{43}$. That is, the alloys having similar characteristics can obtain similar results even if the type of the alloys is changed.

[Production of Si Alloy]

A Si alloy was produced by a mechanical alloying method (or an arc plasma melting method). In particular, the Si alloy was obtained in a manner such that a planetary ball mill P-6 (manufactured by Fritsch, Germany) was used, and zirconia pulverization balls and raw material powder of each alloy were put into a zirconia pulverizing pot so as to subject the mixture to alloying processing at 600 rpm and for 48 hours.

[Production of a comparative Negative electrode and Negative electrode

First, 80 parts by mass of the produced Si alloy ($Si_{41}Sn_{16}Al_{43}$; particle diameter: 0.3 μm) as a negative electrode active material, 5 parts by mass of acetylene black as an electrically-conductive auxiliary agent and 15 parts by mass of polyamide imide as a binder (E elastic modulus: 2.00 GPa) were mixed together and dispersed in N-methyl pyrrolidone so as to prepare negative electrode slurry. The negative electrode slurry thus obtained was applied evenly to both surfaces of a negative electrode current collector formed of a copper foil in a manner such that the thickness of a negative electrode active material layer on each side was 30 $\mu$m, and then dried in a vacuum for 24 hours so as to obtain a negative electrode Negative electrodes according to the invention are described in Examples 2 to 5.

[Production of Positive Electrode]

As a positive electrode active material, $Li_{1.85}Ni_{0.18}Co_{0.10}Mn_{0.87}O_3$ was prepared in a manner described in Example 1 (paragraph [0046]) of JP 2012-185913 A. Next, 90 parts by mass of the positive electrode active material thus obtained, 5 parts by mass of acetylene black as an electrically-conductive auxiliary agent and 5 parts by mass of polyvinylidene fluoride as a binder were mixed together and dispersed in N-methyl pyrrolidone to prepare positive electrode slurry. The positive electrode slurry thus obtained was applied evenly to both surfaces of a positive electrode current collector formed of an aluminum foil in a manner such that the thickness of a positive electrode active material layer on each side was 30 $\mu$m, and then dried so as to obtain a positive electrode.

[Production of Battery]

The produced positive electrode was placed to face the negative electrode, and a separator (polyolefin, film thickness: 20 $\mu$m) was interposed therebetween. A stacked body of the negative electrode, the separator and the positive electrode was placed on the bottom side of a coin cell (CR2032; material: stainless steel (SUS316)). Further, a gasket was attached thereto in order to ensure insulation between the positive electrode and the negative electrode, an electrolysis solution described below was injected therein by use of a syringe, a spring and a spacer were stacked thereon, and an upper member of the coin cell was placed over and cramped to seal so as to obtain a lithium ion secondary battery.
The electrolysis solution used was prepared in a manner such that lithium hexafluorophosphate ($LiPF_6$) as supporting salt was dissolved, at a concentration of 1 mol/L, into an organic solvent in which ethylene carbonate (EC) and diethyl carbonate (DEC) were mixed in a ratio of 1:2 (volume ratio).

(Example 2)

A negative electrode and a battery were produced in the same manner as Example 1 except that polyimide (E elastic modulus: 2.10 GPa) was used as the binder in place of polyamide imide (E elastic modulus: 2.00 GPa).

(Example 3)

A negative electrode and a battery were produced in the same manner as Example 1 except that polyimide (E elastic modulus: 3.30 GPa) was used as the binder in place of polyamide imide (E elastic modulus: 2.00 GPa).

(Example 4)

A negative electrode and a battery were produced in the same manner as Example 1 except that polyimide (E elastic modulus: 3.73 GPa) was used as the binder in place of polyamide imide (E elastic modulus: 2.00 GPa).

(Example 5)

A negative electrode and a battery were produced in the same manner as Example 1 except that polyimide (E elastic modulus: 7.00 GPa) was used as the binder in place of polyamide imide (E elastic modulus: 2.00 GPa).

(Comparative Example 1)

A negative electrode and a battery were produced in the same manner as Example 1 except that polyvinylidene fluoride (PVdF) (E elastic modulus: 1.00 GPa) was used as the binder in place of polyamide imide (E elastic modulus: 2.00 GPa).

(Comparative Example 2)

A negative electrode and a battery were produced in the same manner as Example 1 except that polyimide (E elastic modulus: 7.40 GPa) was used as the binder in place of polyamide imide (E elastic modulus: 2.00 GPa).

(Comparative Example 3)

A negative electrode and a battery were produced in the same manner as Example 4 except that pure Si was used as the negative electrode active material in place of the Si alloy.

(Comparative Example 4)

A negative electrode and a battery were produced in the same manner as Comparative Example 1 except that pure Si was used as the negative electrode active material in place of the Si alloy.

<Performance Evaluation>

[Cycle Property Evaluation]

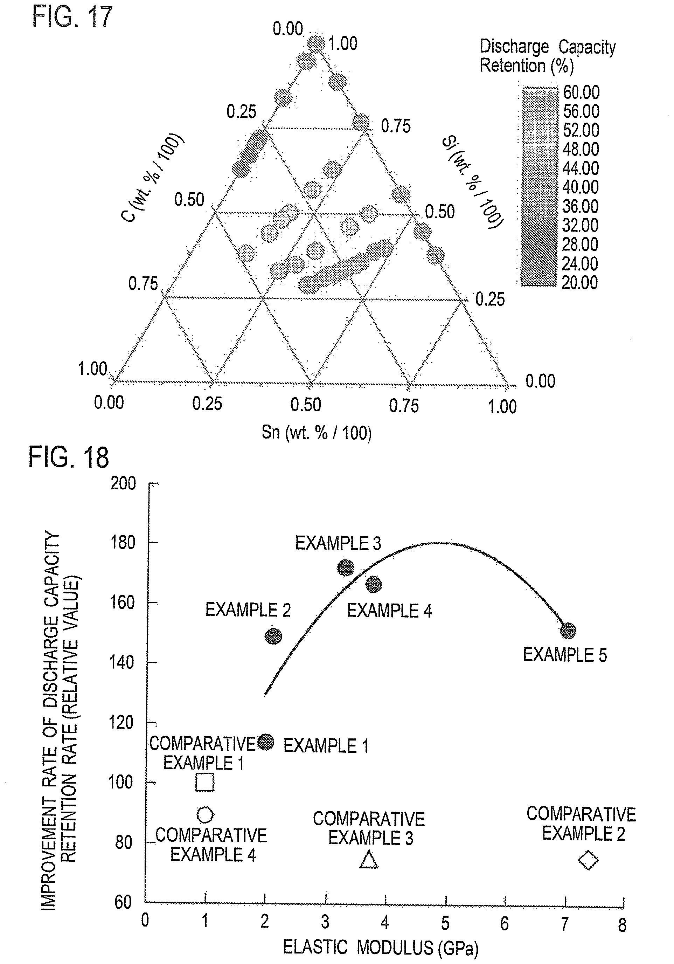

The cycle property evaluation was carried out on the lithium ion secondary battery produced in each of the examples in a manner as described below. First, each battery was charged to 2.0 V at a constant current (CC; current: 0.1 C) under the atmosphere of 30°C and temporarily stopped for 10 minutes. Then, each battery was discharged to 0.01 V at a constant current (CC; current: 0.1 C) and temporarily stopped for 10 minutes. This procedure, which is regarded as a single charge-discharge cycle, was repeated 50 times so as to calculate a ratio of a discharge capacity at the 50th cycle to a discharge capacity at the 1st cycle (a discharge capacity retention rate [%]). Table 4 and Fig. 18 show the results of the obtained discharge capacity retention rates (%) indicated by values normalized in a manner such that the discharge capacity retention rate of Comparative Example 1 is readjusted to 100 (an improvement rate (%) of the discharge capacity retention rate).

[Table 4 Example 1 is not according to the invention.

|  | Active Material | Type of Binder | E Elastic Modulus of Binder (GPa) | Improvement Rate of Discharge Capacity Retention Rate |
|---|---|---|---|---|
| Example 1 | Si Alloy | Polyamide imide | 2.00 | 114 |
| Example 2 | Si Alloy | Polyimide | 2.10 | 149 |
| Example 3 | Si Alloy | Polyimide | 3.30 | 172 |
| Example 4 | Si Alloy | Polyimide | 3.73 | 167 |
| Example 5 | Si Alloy | Polyimide | 7.00 | 152 |
| Comparative Example 1 | Si Alloy | PVdF | 1.00 | 100 |
| Comparative Example 2 | Si Alloy | Polyimide | 7.40 | 75 |
| Comparative Example 3 | Pure Si | Polyimide | 3.73 | 75 |
| Comparative Example 4 | Pure Si | PVdF | 1.00 | 89 |

The tests revealed according to Table 4 and Fig. 18 that the batteries of Examples 2 to 5 each containing the binder having the predetermined E elastic modulus exhibited a high cycle property.

REFERENCE SIGNS LIST

10, 50   LITHIUM ION SECONDARY BATTERY (LAMINATED BATTERY)
11       POSITIVE ELECTRODE CURRENT COLLECTOR
12       NEGATIVE ELECTRODE CURRENT COLLECTOR
13       POSITIVE ELECTRODE ACTIVE MATERIAL LAYER

15      NEGATIVE ELECTRODE ACTIVE MATERIAL LAYER
17      ELECTROLYTE LAYER
19      SINGLE CELL LAYER
21,57   POWER GENERATION ELEMENT
25, 58  POSITIVE ELECTRODE CURRENT COLLECTING PLATE
27, 59  NEGATIVE ELECTRODE CURRENT COLLECTING PLATE
29, 52  BATTERY EXTERIOR MEMBER (LAMINATED FILM)

**Claims**

1. A negative electrode for an electric device, comprising a current collector (12) and an electrode layer (15) containing a negative electrode active material, an electrically-conductive auxiliary agent and a binder and formed on a surface of the current collector (12),
   wherein the negative electrode active material contains an alloy represented by the following formula (1):

$$Si_xSn_yM_zA_a \qquad (1)$$

   in the formula (1), M is Al,
   A is an inevitable impurity, and
   x, y, z and a represent mass percent values and satisfy conditions of $31 \le x \le 50$, $0 < y \le 45$, $0 < z \le 43$, $0 \le a < 0.5$, and x+y+z+a=100, and
   the binder contains a resin having an E elastic modulus measured in accordance with a tension test method prescribed in JIS K 7163 published in 1994 of 2.10 GPa or greater and 7.00 GPa or less.

2. The negative electrode for an electric device according to claim 1, wherein y is 15 or greater, and z is 18 or greater.

3. A negative electrode for an electric device, comprising a current collector (12) and an electrode layer (15) containing a negative electrode active material, an electrically-conductive auxiliary agent and a binder and formed on a surface of the current collector (12),
   wherein the negative electrode active material contains an alloy represented by the following formula (1):

$$Si_xSn_yM_zA_a \qquad (1)$$

   in the formula (1), M is V,
   A is an inevitable impurity, and
   x, y, z and a represent mass percent values and satisfy conditions of $27 \le x < 100$, $0 < y \le 73$, $0 < z \le 73$, $0 \le a < 0.5$, and x+y+z+a=100, and
   the binder contains a resin having an E elastic modulus measured in accordance with a tension test method prescribed in JIS K 7163 published in 1994 of 2.10 GPa or greater and 7.00 GPa or less.

4. The negative electrode for an electric device according to claim 3, wherein x is 84 or less, y is 10 or greater and 73 or less, and z is 6 or greater and 73 or less.

5. The negative electrode for an electric device according to claim 4, wherein y is 10 or greater and 63 or less, and z is 6 or greater and 63 or less.

6. The negative electrode for an electric device according to claim 5, wherein x is 52 or less.

7. The negative electrode for an electric device according to claim 6, wherein y is 40 or less, and z is 20 or greater.

8. A negative electrode for an electric device, comprising a current collector (12) and an electrode layer (15) containing a negative electrode active material, an electrically-conductive auxiliary agent and a binder and formed on a surface of the current collector (12),
   wherein the negative electrode active material contains an alloy represented by the following formula (1):

$$Si_xSn_yM_zA_a \qquad (1)$$

in the formula (1), M is C,
A is an inevitable impurity, and
x, y, z and a represent mass percent values and satisfy conditions of $29 \leq x < 100$, $0 < y < 100$, $0 < z < 100$, $0 \leq a < 0.5$, and $x + y + z + a = 100$, and
the binder contains a resin having an E elastic modulus measured in accordance with a tension test method prescribed in JIS K 7163 published in 1994 of 2.10 GPa or greater and 7.00 GPa or less.

9. The negative electrode for an electric device according to claim 8, wherein x is 63 or less, y is 14 or greater and 48 or less, and z is 11 or greater and 48 or less.

10. The negative electrode for an electric device according to claim 9, wherein x is 44 or less.

11. The negative electrode for an electric device according to claim 10, wherein x is 40 or less, and y is 34 or greater.

12. The negative electrode for an electric device according to any of claims 1 to 11, wherein the E elastic modulus of the resin is 3.30 GPa or greater and 3.73 GPa or less.

13. The negative electrode for an electric device according to any one of claims 1 to 12, wherein the resin is one or two or more materials selected from the group consisting of polyimide, polyamide imide and polyamide.

14. An electric device comprising the negative electrode for an electric device according to any one of claims 1 to 13.

**Patentansprüche**

1. Negativelektrode für eine elektrische Vorrichtung, umfassend einen Stromkollektor (12) und eine Elektrodenschicht (15), die ein Negativelektroden-Aktivmaterial, einen elektrisch leitfähigen Hilfsstoff und ein Bindemittel enthält und auf einer Oberfläche des Stromkollektors (12) ausgebildet ist,
wobei das Negativelektroden-Aktivmaterial eine durch die folgende Formel (1) dargestellte Legierung enthält:

$$Si_xSn_yM_zA_a \qquad (1)$$

wobei M in der Formel (1) Al ist,
A eine unvermeidliche Verunreinigung ist, und
x, y, z und a Massenprozentwerte darstellen und die Bedingungen $31 \leq x \leq 50$, $0 < y \leq 45$, $0 < z \leq 43$, $0 \leq a < 0.5$, und $x + y + z + a = 100$ erfüllen, und
das Bindemittel ein Harz mit einem E-Elastizitätsmodul, gemessen gemäß einem in JIS K 7163 vorgeschriebenen Zugprüfverfahren, das 1994 veröffentlicht wurde, von 2,10 GPa oder mehr und 7,00 GPa oder weniger enthält.

2. Negativelektrode für eine elektrische Vorrichtung, wobei y größer gleich 15 ist, und z größer gleich 18 ist.

3. Negativelektrode für eine elektrische Vorrichtung, umfassend einen Stromkollektor (12) und eine Elektrodenschicht (15), die ein Negativelektroden-Aktivmaterial, einen elektrisch leitfähigen Hilfsstoff und ein Bindemittel enthält und auf einer Oberfläche des Stromkollektors (12) ausgebildet ist,
wobei das Negativelektroden-Aktivmaterial eine durch die folgende Formel (1) dargestellte Legierung enthält:

$$Si_xSn_yM_zA_a \qquad (1)$$

wobei M in der Formel V ist,
A eine unvermeidliche Verunreinigung ist, und
x, y, z und a Massenprozentwerte darstellen und die Bedingungen $27 \leq x < 100$, $0 < y \leq 73$, $0 < z \leq 73$, $0 \leq a < 0.5$, und $x + y + z + a = 100$ erfüllen, und
das Bindemittel ein Harz mit einem E-Elastizitätsmodul, gemessen gemäß einem in JIS K 7163 vorgeschriebenen Zugprüfverfahren, das 1994 veröffentlicht wurde, von 2,10 GPa oder mehr und 7,00 GPa oder weniger enthält.

4. Negativelektrode für eine elektrische Vorrichtung nach Anspruch 3, wobei x kleiner gleich 84 ist, y größer gleich 10 und kleiner gleich 73 ist, und z größer gleich 6 und keiner gleich 73 ist.

5. Negativelektrode für eine elektrische Vorrichtung nach Anspruch 4, wobei y größer gleich 10 und kleiner gleich 63 ist, und z größer gleich 6 und kleiner gleich 63 ist.

6. Negativelektrode für eine elektrische Vorrichtung nach Anspruch 5, wobei x kleiner gleich 52 ist.

7. Negativelektrode für eine elektrische Vorrichtung nach Anspruch 6, wobei y kleiner gleich 40 ist, und z größer gleich 20 ist.

8. Negativelektrode für eine elektrische Vorrichtung, umfassend einen Stromkollektor (12) und eine Elektrodenschicht (15), die ein Negativelektroden-Aktivmaterial, einen elektrisch leitfähigen Hilfsstoff und ein Bindemittel enthält und auf einer Oberfläche des Stromkollektors (12) ausgebildet ist,
wobei das Negativelektroden-Aktivmaterial eine durch die folgende Formel (1) dargestellte Legierung enthält:

$$Si_xSn_yM_zA_a \qquad (1)$$

wobei M in der Formel C ist,
A eine unvermeidliche Verunreinigung ist, und
x, y, z und a Massenprozentwerte darstellen und die Bedingungen $29 \leq x < 100$, $0 < y < 100$, $0 < z < 100$, $0 \leq a < 0,5$, und $x + y + z + a = 100$ erfüllen, und
das Bindemittel ein Harz mit einem E-Elastizitätsmodul, gemessen gemäß einem in JIS K 7163 vorgeschriebenen Zugprüfverfahren, das 1994 veröffentlicht wurde, von 2,10 GPa oder mehr und 7,00 GPa oder weniger enthält.

9. Negativelektrode für eine elektrische Vorrichtung nach Anspruch 8, wobei x kleiner gleich 63 ist, y größer gleich 14 und kleiner gleich 48 ist, und z größer gleich 11 und kleiner gleich 48 ist.

10. Negativelektrode für eine elektrische Vorrichtung nach Anspruch 9, wobei x kleiner gleich 44 ist.

11. Negativelektrode für eine elektrische Vorrichtung nach Anspruch 10, wobei x kleiner gleich 40 ist, und y größer gleich 34 ist.

12. Negativelektrode für eine elektrische Vorrichtung nach einem der Ansprüche 1 bis 11, wobei der E-Elastizitätsmodul des Harzes 3,30 GPa oder mehr und 3,73 GPa oder weniger beträgt.

13. Negativelektrode für eine elektrische Vorrichtung nach einem der Ansprüche 1 bis 12, wobei das Harz aus einem Material oder zwei oder mehr Materialien, ausgewählt aus der Gruppe bestehend aus Polyimid, Polyamidimid und Polyamid, gebildet ist.

14. Elektrische Vorrichtung, umfassend die Negativelektrode für eine elektrische Vorrichtung nach einem der Ansprüche 1 bis 13.

## Revendications

1. Électrode négative pour un dispositif électrique, comprenant un collecteur de courant (12) et une couche d'électrode (15) contenant un matériau actif d'électrode négative, un agent auxiliaire électroconducteur et un liant et formée sur une surface du collecteur de courant (12),
dans laquelle le matériau actif d'électrode négative contient un alliage représenté par la formule (1) suivante :

$$Si_xSn_yM_zA_a \qquad (1)$$

dans la formule (1), M représente Al,
A représente une impureté inévitable, et
x, y, z et a représentent des valeurs de pourcentage massique et satisfont aux conditions de $31 \leq x \leq 50$, $0 < y \leq 45$, $0 < z \leq 43$, $0 \leq a < 0,5$, et $x + y + z + a = 100$, et
le liant contient une résine ayant un module élastique E mesuré selon une méthode d'essai de traction de la norme JIS K 7163 publiée en 1994 allant d'une valeur supérieure ou égale à 2,10 GPa à une valeur inférieure ou égale à 7,00 GPa.

2. Électrode négative pour un dispositif électrique selon la revendication 1, dans laquelle y est supérieur ou égal à 15, et z est supérieur ou égal à 18.

3. Électrode négative pour un dispositif électrique, comprenant un collecteur de courant (12) et une couche d'électrode (15) contenant un matériau actif d'électrode négative, un agent auxiliaire électroconducteur et un liant et formée sur une surface du collecteur de courant (12),
dans laquelle le matériau actif d'électrode négative contient un alliage représenté par la formule (1) suivante :

$$Si_xSn_yM_zA_a \qquad (1)$$

dans la formule (1), M représente V,
A représente une impureté inévitable, et
x, y, z et a représentent des valeurs de pourcentage massique et satisfont aux conditions suivantes $27 \leq x < 100$, $0 < y \leq 73$, $0 < z \leq 73$, $0 \leq a < 0,5$, et $x + y + z + a = 100$, et
le liant contient une résine ayant un module élastique E mesuré selon une méthode d'essai de traction de la norme JIS K 7163 publiée en 1994 allant d'une valeur supérieure ou égale à 2,10 GPa à une valeur inférieure ou égale à 7,00 GPa.

4. Électrode négative pour un dispositif électrique selon la revendication 3, dans laquelle x est inférieur ou égal à 84, y est supérieur ou égal à 10 et inférieur ou égal à 73, et z est supérieur ou égal à 6 et inférieur ou égal à 73.

5. Électrode négative pour un dispositif électrique selon la revendication 4, dans laquelle y est supérieur ou égal à 10 et inférieur ou égal à 63, et z est supérieur ou égal à 6 et inférieur ou égal à 63.

6. Électrode négative pour un dispositif électrique selon la revendication 5, dans laquelle x inférieur ou égal à 52.

7. Électrode négative pour un dispositif électrique selon la revendication 6, dans laquelle y est inférieur ou égal à 40, et z est supérieur ou égal à 20.

8. Électrode négative pour dispositif électrique, comprenant un collecteur de courant (12) et une couche d'électrode (15) contenant un matériau actif d'électrode négative, un agent auxiliaire électroconducteur et un liant et formée sur une surface du collecteur de courant (12),
dans laquelle le matériau actif d'électrode négative contient un alliage représenté par la formule (1) suivante :

$$Si_xSn_yM_zA_a \qquad (1)$$

dans la formule (1), M représente C,
A représente une impureté inévitable, et
x, y, z et a représentent des valeurs de pourcentage massique et satisfont aux conditions suivantes $29 \leq x < 100$, $0 < y < 100$, $0 < z < 100$, $0 \leq a < 0,5$, et $x + y + z + a = 100$, et
le liant contient une résine ayant un module élastique E mesuré selon une méthode d'essai de traction de la norme JIS K 7163 publiée en 1994 allant d'une valeur supérieure ou égale à 2,10 GPa à une valeur inférieure à 7,00 GPa.

9. Électrode négative pour un dispositif électrique selon la revendication 8, dans laquelle x est inférieur ou égal à 63, y est supérieur ou égal à 14 et inférieur ou égal à 48, et z est supérieur ou égal à 11 et inférieur ou égal à 48.

10. Électrode négative pour un dispositif électrique selon la revendication 9, dans laquelle x est inférieur ou égal à 44.

11. Électrode négative pour un dispositif électrique selon la revendication 10, dans laquelle x est inférieur ou égal à 40 et y est supérieur ou égal à 34.

12. Électrode négative pour un dispositif électrique selon l'une des revendications 1 à 11, dans laquelle le module élastique E de la résine est supérieur ou égal à 3,30 GPa et inférieur ou égal à 3,73 GPa.

**13.** Électrode négative pour dispositif électrique selon l'une quelconque des revendications 1 à 12, dans laquelle la résine est un ou deux ou plusieurs matériau(x) choisi(s) dans le groupe constitué de polyimide, de polyamideimide et de polyamide.

**14.** Dispositif électrique comprenant l'électrode négative pour un dispositif électrique selon l'une quelconque des revendications 1 à 13.

# FIG. 1

EP 2 924 775 B1

FIG. 2

# FIG. 3

# FIG. 4

FIG. 5

FIG. 6

FIG. 7

# FIG. 8

# FIG. 9

## FIG. 10

## FIG. 11

# FIG. 12

# FIG. 13

# FIG. 14

FIG. 15

Sn (wt. % / 100)

FIG. 16

Sn (wt. % / 100)

FIG. 17

FIG. 18

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP T2009517850 PCT
- WO 2012160866 A
- WO 2012160858 A
- WO 2013099440 A
- US 2006040182 A
- JP 2012185913 A